# EUROPÄISCHE PATENTSCHRIFT

(11) **EP 2 203 348 B1**
(45) Veröffentlichungstag und Bekanntmachung des Hinweises auf die Patenterteilung: **28.03.2012**
(21) Anmeldenummer: 08843062.4
(22) Anmeldetag: 17.10.2008
(51) Int. Cl.: B64D 13/00, B64D 13/04

(54) **SYSTEM UND VERFAHREN ZUR KLIMATISIERUNG ZUMINDEST EINES TEILBEREICHS EINES FLUGZEUGS**
SYSTEM AND METHOD FOR AIR CONDITIONING AT LEAST ONE PARTIAL REGION OF AN AIRPLANE
SYSTÈME ET PROCÉDÉ POUR CLIMATISER AU MOINS UNE ZONE PARTIELLE D'UN AVION

(30) Priorität: 18.10.2007 DE 102007049926; 18.10.2007 US 980887 P
(43) Veröffentlichungstag der Anmeldung: 07.07.2010
(60) Teilanmeldung: 11003796.7
(73) Patentinhaber: Airbus Operations GmbH, 21129 Hamburg (DE)
(72) Erfinder: MARKWART, Michael, 25469 Halstenbek (DE); BENDFELDT, Peggy, 22607 Hamburg (DE); GORES, Ingo, 22607 Hamburg (DE); BUCHHOLZ, Uwe, 21640 Bliedersdorf (DE); KÖPP, Christina, 21614 Buxtehude (DE)
(74) Vertreter: Schicker, Silvia
(86) Internationale Anmeldenummer: PCT/EP2008/008817
(87) Internationale Veröffentlichungsnummer: WO 2009/053002

(56) Entgegenhaltungen:
- EP-A- 0 693 423
- FR-A- 882 307
- US-A- 2 449 231
- US-A- 2 755 638
- US-A- 5 701 755

## Beschreibung

Die vorliegende Erfindung betrifft eine Flugzeugklimatisierung sowie ein Verfahren zur Klimatisierung zumindest eines Teilbereichs eines Flugzeugs.

Gegenwärtig arbeiten in Flugzeugen zur Belüftung und Bedruckung der Flugzeugpassagierkabine und/oder des Frachtraums eingesetzte Klimatisierungssysteme nach dem Prinzip der Mischlüftung. Bei der auch als Verdünnungs- oder Strahllüftung bezeichneten Mischlüftung wird durch üblicherweise im Deckenbereich eines zu belüftenden Teils des Flugzeugs angeordnete Lufteinlässe ggf. je nach Bedarf temperierte Luft mit hohem Impuls und mit hoher Geschwindigkeit (ca. 0,7 bis 3 m/s) in den zu belüftenden Teil des Flugzeugs eingeblasen. Infolge des hohen Impulses und der hohen Geschwindigkeit der eingeblasenen Luft bilden sich in dem zu belüftenden Teil des Flugzeugs Luftwalzen aus, die für eine nahezu homogene Durchmischung der Luft mit der Raumluft sorgen, wobei durch Wärmequellen sowie kalte oder warme Oberflächen induzierte freie Konvektion durch die erzwungene Strömung der Luftwalzen dominiert wird. Die Luftstrahlen der Luftwalzen können Luftgeschwindigkeiten erreichen, die jenseits der Komfortgrenze für die Passagiere und die Crew liegen. Die Abluftabfuhr aus dem zu belüftenden Teil des Flugzeugs erfolgt üblicherweise durch im Bodenbereich des zu belüftenden Teil des Flugzeugs vorgesehene Luftauslässe. Durch die Luftauslässe abgeführte Abluft wird in der Regel zumindest zum Teil gefiltert, in einem Mischer mit frischer Außenluft gemischt und schließlich in den zu belüftenden Teil des Flugzeugs zurückgeführt. Überschüssige Abluft kann zur Einstellung eines gewünschten Kabinendrucks, je nach Bedarf, durch Druckregelventile (outflow valves), die einen bedruckten Bereich des Flugzeugs mit der Außenatmosphäre verbinden, an die Umgebung abführt werden.

Bei der Ausbildung von Luftwalzen entstehen zwangsläufig Bereiche, in denen sich freie Konvektion und erzwungene Strömung ergänzen bzw. addieren und Bereiche, in denen die freie Konvektion der erzwungenen Strömung entgegenwirkt. Die resultierende Raumströmung weist somit Bereiche mit hoher Strömungsgeschwindigkeit und Bereiche mit niedriger Strömungsgeschwindigkeit auf. Die Strömungsgeschwindigkeitsunterschiede erhöhen sich mit steigender Wärmelast. Ferner kann es durch die relativ gebündelte Einbringung der kühlen Luft, die Strahlausbildung sowie die inhomogene Geschwindigkeit und Kühllasteinbringung in dem zu belüftenden Teil des Flugzeugs zu einer ungleichmäßigen Temperaturverteilung kommen. Darüber hinaus führt die Zufuhr von sehr kühler Luft in die Passagierkabine zu deutlichen Einschränkungen des Komforts der Passagiere und der Besatzungsmitglieder. Infolge dessen sollte die Differenz zwischen der Temperatur der über die Lufteinlässe zugeführten Luft und der Temperatur der Raumluft in dem zu belüftenden Teil des Flugzeugs nicht zu groß sein. Hohe Wärmelasten können dann jedoch nur mittels entsprechend hoher Luftvolumenströme abgeführt werden, die eine Luftzufuhr mit sehr hoher Geschwindigkeit und/oder eine Vergrößerung der Luftauslässe erfordern. Dies kann zu unangenehm empfundene Zugerscheinungen sowie störenden Geräuschen führen.

Der geringe Abstand zwischen den Lufteinlässen und den Sitzpositionen der Passagiere in Passagierflugzeugen limitiert die zur Verfügung stehende Strahllänge und die Geschwindigkeit der durch die Lufteinlässe eingeblasenen Luft. Unter Umständen können jedoch zumindest lokal oberhalb des komfortablen Bereichs liegende Luftgeschwindigkeiten entstehen, während gleichzeitig andere Bereiche der Kabine nicht ausreichend belüftet sind. Darüber hinaus können in der Flugzeugpassagierkabine vorgesehene Sonderbereiche, wie z.B. Bordküchen, Ruhezonen für Besatzungsmitglieder oder Barbereiche sowie zur Zonierung der Flugzeugpassagierkabine eingesetzte Vorhänge, die Ausbildung der für die Mischlüftung charakteristischen Luftwalzen stören, was ebenfalls zumindest in lokal begrenzten Bereichen der Kabine Komforteinschränkungen für die Passagiere und die Besatzungsmitglieder zur Folge haben kann. Ferner verstärken die sich bei einer Mischlüftung einstellenden teilweise turbulenten Luftströmungsverhältnisse die durch die geringe Luftfeuchtigkeit in der Passagierkabine von nur 5 bis 15 % relativer Feuchte verursachte Austrocknung der Haut, der Augen und der Schleimhäute.

Ein weiterer Nachteil des Mischlüftungsprinzips besteht darin, dass durch die sich ausbildenden Luftwalzen Schadstoffe rasch im gesamten Strömungsquerschnitt des Flugzeugs verteilt werden und überdies Längsströmungen begünstigt werden. Dies ist besonders im Brandfall mit Rauchbildung problematisch, da der Rauch durch die sich bei einer Mischbelüftung einstellenden Luftströmungsverhältnisse so schnell verteilt wird, dass keine nicht kontaminierten Ausweichbereiche übrig bleiben.

Schließlich kann eine Flugzeugkabine, die durch eine nach dem Prinzip der Mischlüftung arbeitende Klimaanlage belüftet wird, nur in Längsrichtung in einzelne Klimazonen unterteilt werden. Dies führt zu einer starken Einschränkung der vom Markt zunehmend geforderten Flexibilität bei der Gestaltung der Flugzeugkabine.

In der Vergangenheit hat durch den Einbau von Unterhaltungselektroniksystemen für die Passagiere, Lichtsystemen und dergleichen die aus einer Flugzeugkabine abzuführende Wärmelast stetig zugenommen. Sollte dieser Trend anhalten, dürfte es in Zukunft zunehmend schwieriger werden, im Betrieb eines nach dem Prinzip der Mischlüftung arbeitenden Flugzeugklimatisierungssystems einen sinnvollen Kompromiss zwischen komfortabler Lufttemperatur bzw. -geschwindigkeit und ordnungsgemäßer Wärmeabfuhr zu finden.

Die vorliegende Erfindung ist auf die Aufgabe gerichtet, ein Flugzeug sowie ein Verfahren zur Klimatisierung zumindest eines Teilbereichs eines Flugzeugs anzugeben, die eine ordnungsgemäße Abfuhr auch hoher Wärmelasten aus einem zu belüftenden Teil des Flugzeugs und gleichzeitig die Schaffung komfortabler Umgebungsbedingungen für die sich in dem zu belüftenden Teil des Flugzeugs aufhaltenden Passagiere und Besatzungsmitglieder ermöglichen.

Diese Aufgabe wird durch ein Fluzeug mit den Merkmalen des Anspruch 1 und ein verfahren mit den Merkmalen des Anspruchs 8 gelost.

Zur Lösung dieser Aufgabe umfasst ein erfindungsgemäßes System zur Klimatisierung zumindest eines Teilbereichs eines Flugzeugs eine Luftbereitstellungseinrichtung zur Bereitstellung und Konditionierung von einem zu belüftenden Bereich des Flugzeugs mit einer gewünschten Temperatur, einem gewünschten Druck und einer gewünschten Feuchte sowie in einer gewünschten Menge zuzuführender Luft. Der zu belüftende Flugzeugbereich kann eine Passagierkabine oder ein Abschnitt der Passagierkabine, aber auch ein anderer Bereich des Flugzeugs, wie z.B. ein Frachtraum oder ein Frachtraumabschnitt sein. Die Luftbereitstellungseinrichtung kann eine Verdichtereinrichtung umfassen. Die Verdichtereinrichtung kann beispielsweise in Form einer Air Cycle Machine ausgebildet sein, der von den Triebwerken des Flugzeugs bereitgestellte Zapfluft oder von Kompressoren des Flugzeugs oder einer beliebigen anderen Luftquelle bereitgestellte Luft zugeführt wird. Vorzugsweise ist die Luftbereitstellungseinrichtung bzw. die Verdichtereinrichtung der Luftbereitstellungseinrichtung auch dazu geeignet, die dem zu belüftenden Bereich des Flugzeugs zuzuführende Luft zu entwässern. Darüber hinaus umfasst die Luftbereitstellungseinrichtung vorzugsweise einen Mischer, in dem die von der Verdichtereinrichtung bereitgestellte klimatisierte Luft mit Rezirkulationsluft gemischt wird, um die Temperatur und/oder die Feuchte der von der Luftbereitstellungseinrichtung bereitgestellten Luft zu steuern. Eine Feinsteuerung der Temperatur der einzelnen Klimazonen des Flugzeugs zuzuführender Luft kann durch die Zufuhr zusätzlicher Heißluft stromabwärts des Mischers erfolgen. Die Heißluft kann als Zapfluft von den Triebwerken des Flugzeugs abgezweigt, aber auch von einer beliebigen anderen Heißluftquelle bereitgestellt werden. Alternativ oder zusätzlich dazu ist es selbstverständlich auch möglich, die von der Verdichtereinrichtung der Luftbereitstellungseinrichtung bereitgestellte klimatisierte Luft bei Bedarf mittels einer geeigneten Heizeinrichtung, wie z.B. einer elektrischen Heizeinrichtung, auf die gewünschte Temperatur zu erwärmen.

Ein Zuluftkanal des erfindungsgemäßen Systems zur Klimatisierung zumindest eines Teilbereichs eines Flugzeugs ist an einem ersten Ende mit der Luftbereitstellungseinrichtung verbunden. Ein zweites Ende des Zuluftkanals ist mit einem bodennah in den zu belüftenden Bereich des Flugzeugs mündenden Lufteinlass verbunden. Der Zuluftkanal stellt somit eine Verbindung zwischen der Luftbereitstellungseinrichtung und dem Lufteinlass her. Das erfindungsgemäße System kann lediglich einen, beispielsweise großflächigen Lufteinlass aufweisen. Alternativ dazu kann jedoch eine Mehrzahl von Lufteinlässen vorgesehen sein, die bodennah in den zu belüftenden Bereich des Flugzeugs münden. Beispielsweise können mehrere großflächige Lufteinlässe vorgesehen sein. Bei Bedarf kann der Zuluftkanal auch entsprechend verzweigt sein, um alle Lufteinlässe mit von der Luftbereitstellungseinrichtung bereitgestellter Luft zu versorgen.

Schließlich umfasst das erfindungsgemäße Flugzeugklimatisierungssystem eine Steuervorrichtung, die dazu eingerichtet ist, zu gewährleisten, dass die von der Luftbereitstellungseinrichtung bereitgestellte Luft über den Lufteinlass mit einer derartigen Geschwindigkeit in den zu belüftenden Bereich des Flugzeugs eintritt, dass sich die Luft in dem zu belüftenden Bereich des Flugzeugs über die gesamke fläche verteilt und eine bodennahe klimatisationsluftschich bildet und an in dem zu belüftenden Bereich des Flugzeugs vorhandenen Wärmequellen durch freie konnektion aufsteilgt. Mit anderen Worten, die Steuervorrichtung sorgt dafür, dass sich im Zuluftkanal ein Druck einstellt, der sicherstellt, dass die Luft den Lufteinlass mit einem Impuls und mit einer Geschwindigkeit verlässt, die deutlich niedriger sind als bei einem nach dem Prinzip der Mischlüftung arbeitenden System. Die Steuervorrichtung kann eine elektrische oder elektronische Steuereinheit zur Steuerung der Luftbereitstellungseinrichtung umfassen, die dafür sorgt, dass die Luft von der Luftbereitstellungseinrichtung mit einem gewünschten Druck in den Zuluftkanal geleitet wird. Eine derartige Steuereinheit kann auch dazu eingesetzt werden, die Menge sowie die Feuchte der von der von der Luftbereitstellungseinrichtung bereitgestellten Luft wie gewünscht zu steuern. Alternativ oder zusätzlich dazu kann die Steuervorrichtung jedoch auch mechanische Komponenten wie z.B. Ventile, Drosseln, Blenden, etc. zur Einstellung des Luftdrucks im Zuluftkanal aufweisen. Diese mechanischen Komponenten können elektronisch oder elektrisch gesteuert werden, wobei hierzu die elektrische oder elektronische Steuereinheit eingesetzt werden kann, die auch zur Steuerung der Luftbereitstellungseinrichtung verwendet wird.

In einem mittels des erfindungsgemäßen Flugzeugklimatisierungssystems belüfteten Flugzeugbereich stellen sich völlig andere Strömungsverhältnisse ein als in einem nach dem Mischlüftungsprinzip belüfteten Flugzeugbereich. Insbesondere bilden sich keine Luftwalzen. Die Geschwindigkeit und der Impuls der aus dem Lufteinlass austretenden Luft beeinflussen die Raumströmung in dem zu belüftenden Flugzeugbereich nur in unmittelbarer Nähe des Lufteinlasses. Stattdessen werden die Strömungsverhältnisse in dem zu belüftenden Flugzeugbereich durch thermische Effekte, insbesondere die Auftriebskräfte der in dem zu belüftenden Flugzeugbereich vorhandenen Wärmequellen bestimmt. Die sich in einem mittels des erfindungsgemäßen Klimatisierungssystems belüfteten Flugzeugbereich einstellenden Strömungsverhältnisse ähneln somit den Strömungsverhältnissen, die sich in einem nach dem Prinzip der Quelllüftung belüfteten Gebäude ausbilden.

Die Strömungsgeschwindigkeit, mit der die von der Luftbereitstellungseinrichtung bereitgestellte Luft aus dem Lufteinlass austritt, wird, wie bereits erwähnt, vom Luftdruck im Zuluftkanal, aber auch von einem Strömungsquerschnitt des Lufteinlasses bzw. der Lufteinlässe beeinflusst. Wenn der Lufteinlass einen konstanten Strömungsquerschnitt aufweist, steuert die Steuervorrichtung den Luftdruck im Zuluftkanal unter Berücksichtigung des konstanten Strömungsquerschnitts des Lufteinlasses. Das heißt, der Luftdruck im Zuluftkanal wird so gesteuert, dass sich beim Durchtritt der Luft durch den Strömungsquerschnitt des Lufteinlasses die Strömungsgeschwindigkeit und der Strömungsimpuls einstellen, die in dem zu belüftenden Bereich des Flugzeugs zu den gewünschten, zuvor definierten Strömungsverhältnissen führen. Alternativ dazu kann der Lufteinlass jedoch auch einen variablen Strömungsquerschnitt aufweisen. Die Steuervorrichtung kann dann dazu eingerichtet sein, sowohl den Luftdruck im Zuluftkanal als auch den Strömungsquerschnitt des Lufteinlasses so zu steuern, dass die Luft aus dem Lufteinlass mit der Geschwindigkeit und dem Impuls austritt, dass sich in dem zu belüftenden Bereich des Flugzeugs die gewünschten, zuvor definierten Strömungsverhältnisse einstellen. Alternativ dazu kann jedoch auch eine separate Steuervorrichtung, beispielsweise eine elektronische Steuereinheit, zur Steuerung des variablen Strömungsquerschnitts des Lufteinlasses vorhanden sein.

Eine in einem Flugzeug eingesetzte Luftbereitstellungseinrichtung kann im energetisch effizienten Betrieb lediglich einen limitierten Luftvolumenstrom bereitstellen. Die Steuerung der Raumtemperatur in dem zu belüftenden Bereich des Flugzeugs kann daher bei dem erfindungsgemäßen Klimatisierungssystem nur in begrenztem Maße durch eine entsprechende Steuerung des dem zu belüftenden Flugzeugbereich zugeführten Luftvolumenstroms erfolgen. Die Steuervorrichtung des erfindungsgemäßen Systems zur Klimatisierung zumindest eines Teilbereichs eines Flugzeugs ist daher ferner dazu eingerichtet, beispielsweise durch eine entsprechende Steuerung der Luftbereitstellungseinrichtung zu gewährleisten, dass die von der Luftbereitstellungseinrichtung bereitgestellte Luft über den Lufteinlass mit einer derartigen Temperatur in den zu belüftenden Bereich des Flugzeugs eintritt, dass sich in dem zu belüftenden Bereich des Flugzeugs eine gewünschte Raumtemperatur einstellt. Die Temperatur der von der Luftbereitstellungseinrichtung bereitgestellten Luft kann beispielsweise durch eine entsprechende Einstellung der Temperatur der von einer Verdichtereinrichtung der Luftbereitstellungseinrichtung erzeugten Luft, durch eine Zumischung von Rezirkulationsluft zu der von der Verdichtereinrichtung erzeugten Luft in einem Mischer der Luftbereitstellungseinrichtung und/oder durch eine Zumischung von Heißluft stromabwärts des Mischers gesteuert werden. Die Steuerung der Raumtemperatur in dem zu belüftenden Bereich des Flugzeugs kann mit Hilfe von Signalen erfolgen, die der Steuervorrichtung von einem in dem zu belüftenden Bereich des Flugzeugs angeordneten Temperaturfühler übermittelt werden.

Bei dem neuartigen Klimatisierungssystem des erfindungsgemäßen Flugzeugs wird die Klimatisationsluft dem zu belüftenden Flugzeugbereich mit einer deutlich geringeren Geschwindigkeit und einem deutlich geringeren Impuls zugeführt als dies bei einem nach dem Mischlüftungsprinzip arbeitenden Klimatisierungssystem der Fall ist. Geräuschbelästigungen, die bei einem nach dem Mischlüftungsprinzip arbeitenden Klimatisierungssystem durch die Zufuhr von Luft mit hoher Geschwindigkeit verursacht werden, werden somit bei der erfindungsgemäßen Anordnung zuverlässig vermieden. In einem mit Hilfe des neuartigen Klimatisierungssystems des erfindungsgemäßen flugzeugs belüften Fluzeugbereich bilden sich zudem keine für eine Mischlüftung charakteristische Luftwalzen aus. Vielmehr verteilt sich die Klimatisationsluft langsam über die gesamte Bodenfläche des zu belüftenden Flugzeugbereichs und steigt an Wärmequellen durch freie Konvektion langsam auf. Die sich in dem zu belüftenden Flugzeugbereich einstellende Raumströmung zeichnet sich somit großräumig durch geringe Luftgeschwindigkeiten aus. Dadurch werden den Komfort der Passagiere und der Besatzungsmitglieder einschränkende Zugerscheinungen vermieden. Darüber hinaus wird die Austrocknung der Haut, der Augen und der Schleimhäute vermindert, so dass trockene Luft als deutlich weniger unangenehm empfunden wird. Schließlich führt der geringere Luftaustausch an in dem zu belüftenden Flugzeugbereich angeordneten Oberflächen zu einer geringeren Verschmutzung der Kabinenverkleidung.

Ein weiterer Vorteil der sich in einem mit Hilfe des neuartijen Klimatisierungssystems belüfteten Flugzeugbereich einstellenden Strömungsverhältnisse besteht darin, dass Schadstoffe und Krankheitserreger nicht mehr gleichmäßig in Querrichtung verteilt werden. Dies ermöglicht eine deutliche Verbesserung der Luftqualität in dem zu belüftenden Flugzeugbereich. Besonders vorteilhaft sind die sich in einem mit Hilfe des neuartijen Klimatisierungssystems belüfteten Flugzeugbereich einstellenden Strömungsverhältnisse im Brandfall mit Rauchentwicklung, da sich der Rauch nicht so schnell in dem zu belüftenden Flugzeugbereich verteilt. Darüber hinaus entsteht durch die Luftzufuhr durch den bodennah angeordneten Lufteinlass in Bodennähe eine hauptsächlich Frischluft enthaltende und damit weniger rauchkontaminierte Luftschicht. Passagiere und Besatzungsmitglieder können dann beispielsweise entlang der Notbeleuchtung am Boden gebückt laufen oder kriechen und dabei weniger kontaminierte Luft einatmen.

Da die Strömungsverhältnisse in einem mittels des neuartijen Klimatisierungssystems belüfteten Flugzeugbereich nicht länger durch eine erzwungene Luftwalzenströmung bestimmt werden, wird schließlich die Grundlage für eine flexible Zonierung des zu belüftenden Flugzeugbereichs geschaffen, obgleich der für die Schaffung einzelner Klimazonen erforderliche Aufwand (Sensoren, Heizer, Heißlufteinspeisung und Luftführungsteitungen) gleich bleibt. Beispielsweise kann eine mittels des neuartijen Klimatisierungssystems belüftete Flugzeugkabine auch in Querrichtung in einzelne Klimazonen unterteilt werden. Dies ermöglicht eine deutliche Flexibilisierung des Kabinendesigns.

Das neuartijen Flugzeugklimatisierungssystem ermöglicht eine ordnungsgemäße Abfuhr auch hoher Wärmelasten aus dem zu belüftenden Flugzeugbereich. Darüber hinaus kann besonders gut auf individuell variierende Wärmelasten reagiert werden. Insbesondere kann die Steuervorrichtung dazu eingerichtet sein, eine individuelle Belüftung und Temperierung einzelner Flugzeugbereiche zu gewährleisten. Mit anderen Worten die Strömungsgeschwindigkeit und/oder die Temperatur der über den Lufteinlass in einen zu belüftenden Flugzeugbereich eintretenden Luft kann von Flugzeugbereich zu Flugzeugbereich variiert werden, um auf unterschiedliche Wärmelasten oder unterschiedliche Nutzung in den einzelnen Flugzeugbereichen zu reagieren.

Bei dem neuartijen System zur Klimatisierung zumindest eines Teilbereichs eines Flugzeugs ist die Steuervorrichtung dazu eingerichtet, zu gewährleisten, dass die von der Luftbereitstellungseinrichtung bereitgestellte Luft über den Lufteinlass mit einer Geschwindigkeit von 0,1 bis 0,5 m/s in den zu belüftenden Bereich des Flugzeugs eintritt. Die Lufteintrittsgeschwindigkeit wird vorzugsweise so gewählt, dass sich einerseits keine Luftwalzen ausbilden und andererseits bei den Passagieren kein Zugempfinden eintritt, was dann der Fall ist, wenn die Luftgeschwindigkeit in der Nähe der Passagiere unterhalb der Komfortgrenze von ca. 0,25 m/s bleibt. Die bevorzugte Lufteintrittsgeschwindigkeit hängt somit auch vom Abstand des Lufteinlasses von den Passagieren ab. Wird die Luft passagiernah eingebracht, beträgt die Lufteintrittsgeschwindigkeit vorzugsweise ca. 0,25 m/s. In einer Konstellation, bei der der Lufteinlass eine größere Distanz zu den Passagieren hat oder die Zuluft in einem Verdrängersystem quasi laminar eingebracht wird, könnte auch eine höhere Lufteintrittsgeschwindigkeit gewählt werden, die sich in der Nähe der Passagiere jedoch soweit reduziert haben muss, dass die Komfortgrenzen eingehalten werden.

Der Lufteinlass oder die Lufteinlässe kann/können im Bereich eines Bodens des zu belüftenden Flugzeugbereichs angeordnet sein. Insbesondere wenn eine Mehrzahl von Lufteinlässen vorgesehen ist, können die Lufteinlässe über den gesamten Boden des zu belüftenden Flugzeugbereichs verteilt sein. Alternativ dazu ist es auch möglich, die Luftauslässe in einem bestimmten Abschnitt/bestimmten Abschnitten des Bodens zu konzentrieren. Wenn es sich bei dem zu belüftenden Flugzeugbereich um die Passagierkabine des Flugzeugs handelt, können die Lufteinlässe beispielsweise in einem den Gangbereich bildenden Abschnitt des Passagierkabinenbodens oder unter den Passagiersitzen angeordnet sein.

Der Lufteinlass oder die Lufteinlässe kann/können auch in einem bodennahen Bereich einer Seitenwand des zu belüftenden Flugzeugbereichs angeordnet sein. Insbesondere dann, wenn eine Mehrzahl von Lufteinlässen vorhanden ist, können die Lufteinlässe über den gesamten bodennahen Bereich einer Seitenwand des zu belüf- tenden Flugzeugbereichs verteilt sein. Eine derartige Positinierung der luflauslässe ist beispielsweise aus dem Dokument FR-A-882307 bekannt. Alternativ dazu ist es jedoch auch denkbar, die Lufteinlässe in einem bestimmten Abschnitt/bestimmten Abschnitten des bodennahen Bereichs einer Seitenwand des zu belüftenden Flugzeugbereichs zu konzentrieren. Darüber hinaus ist es auch denkbar, einen Lufteinlass oder mehrere Lufteinlässe im Bereich eines Bodens des zu belüftenden Flugzeugbereichs und zusätzlich einen Lufteinlass oder mehrere Lufteinlässe in einem bodennahen Bereich einer Seitenwand des zu belüftenden Flugzeugbereichs vorzusehen.

Eine Ausbildung des neuartijen Flugzeugklimatisierungssystems umfasst ferner eine Einrichtung zur Bereitstellung und Konditionierung von dem zu belüftenden Bereich des Flugzeugs mit einer gewünschten Temperatur, einem gewünschten Druck und einer gewünschten Feuchte sowie in einer gewünschten Menge zuzuführender Hilfsluft. Die Hilfsluftbereitstellungseinrichtung kann eine separate Einrichtung sein, die einen ähnlichen Aufbau aufweist wie die Luftbereitstellungseinrichtung. Alternativ dazu kann die Hilfsluftbereitstellungseinrichtung jedoch auch durch die Luftbereitstellungseinrichtung gebildet, in die Luftbereitstellungseinrichtung integriert oder mit der Luftbereitstellungseinrichtung verbunden sein. Wesentlich ist lediglich, dass dem Hilfslufteinlass separat von der dem Lufteinlass zugeführten Luft Hilfsluft zugeleitet wird, wobei der Druck, die Temperatur, die Feuchte und/oder die Menge der Hilfsluft vorzugsweise unabhängig vom Druck, der Temperatur, der Feuchte und/oder der Menge der dem Lufteinlass zugeführten Luft einstellbar ist.

Die Hilfsluftbereitstellungseinrichtung ist vorzugsweise mit einem ersten Ende eines Hilfszuluftkanals verbunden. Ein zweites Ende des Hilfszuluftkanals kann mit einem in den zu belüftenden Flugzeugbereich mündenden Hilfslufteinlass verbunden sein. Es kann lediglich ein beispielsweise großflächig oder spaltförmig ausgebildeter Hilfslufteinlass vorgesehen sein. Alternativ dazu kann jedoch auch eine Mehrzahl von Hilfslufteinlässen vorhanden sein. Der Hilfszuluftkanal kann dann entsprechend verzweigt sein, um allen Hilfslufteinlässen von der Hilfsluftbereitstellungseinrichtung bereitgestellte Hilfsluft zuzuführen.

Der Hilfslufteinlass oder die Hilfslufteinlässe kann/können im Bereich einer Seitenwand des zu belüftenden Flugzeugbereichs angeordnet sein. Alternativ oder zusätzlich dazu kann/können der Hilfslufteinlass oder die Hilfslufteinlässe auch im Bereich einer Decke des zu belüftenden Flugzeugbereichs angeordnet sein. Für im Bereich einer Seitenwand bzw. im Bereich einer Decke des zu belüftenden Flugzeugbereichs angeordnete Hilfslufteinlässe können jeweils separate Hilfsluftbereitstellungseinrichtungen und/oder Hilfszuluftkanäle vorgesehen sein. Es ist jedoch auch möglich, lediglich eine Hilfsluftbereitstellungseinrichtung über entsprechende Hilfszuluftkanäle mit im Bereich einer Seitenwand und im Bereich einer Decke des zu belüftenden Flugzeugbereichs angeordneten Hilfslufteinlässe zu verbinden.

Das neuartije Flugzeugklimatisierungssystem kann ferner eine Hilfssteuervorrichtung umfassen die dazu eingerichtet ist, zu gewährleisten, dass die von der Hilfsluftbereitstellungseinrichtung bereitgestellte Hilfsluft über einen im Bereich einer Seitenwand des zu belüftenden Flugzeugbereichs angeordneten Hilfslufteinlass mit einer derartigen Geschwindigkeit in den zu belüftenden Flugzeugbereich eintritt, dass sich die Luft in dem zu belüftenden Flugzeugbereich im Bereich einer durch die Anordnung des Hilfslufteinlasses definierten Ebene, d.h. in etwa auf der Höhe des Hilfslufteinlasses horizontal verteilt und an in dem zu belüftenden Flugzeugbereich vorhandenen Wärmequellen aufsteigt. Die Hilfssteuervorrichtung kann eine elektrische oder elektronische Steuereinheit zur Steuerung der Hilfsluftbereitstellungseinrichtung umfassen. Diese Steuereinheit kann die Hilfsluftbereitstellungseinrichtung so steuern, dass die Luft von der Hilfsluftbereitstellungseinrichtung mit einem gewünschten Druck in den Hilfszuluftkanal geleitet wird. Eine derartige Steuereinheit kann auch dazu eingesetzt werden, die Menge sowie die Feuchte der von der von der Hilfsluftbereitstellungseinrichtung bereitgestellten Luft wie gewünscht zu steuern. Alternativ oder zusätzlich dazu kann die Hilfssteuervorrichtung jedoch auch mechanische Komponenten wie z.B. Ventile, Drosseln, Blenden, etc. zur Einstellung des Luftdrucks im Hilfszuluftkanal aufweisen. Diese mechanischen Komponenten können elektronisch oder elektrisch gesteuert werden, wobei hierzu die elektrische oder elektronische Steuereinheit eingesetzt werden kann, die auch zur Steuerung der Hilfsluftbereitstellungseinrichtung verwendet wird.

Beispiels, ist die Hilfssteuervorrichtung dazu eingerichtet, zu gewährleisten, dass die von der Hilfsluftbereitstellungseinrichtung bereitgestellte Hilfsluft über den im Bereich einer Seitenwand des zu belüftenden Flugzeugbereichs angeordneten Hilfslufteinlass mit einer Geschwindigkeit von maximal 1 m/s in den zu belüftenden Bereich des Flugzeugs eintritt. Bei einer derartigen Lufteinblasgeschwindigkeit und einem daraus resultierenden Impuls der eingeblasenen Hilfsluft wird sichergestellt, dass sich in dem zu belüftenden Flugzeugbereich die zuvor beschriebenen Strömungsverhältnisse einstellen.

Wenn die Hilfsluft über den im Bereich einer Seitenwand des zu belüftenden Flugzeugbereichs angeordneten Hilfslufteinlass mit einer derartigen Geschwindigkeit und einem daraus resultierenden Impuls in den zu belüftenden Flugzeugbereich eingeblasen wird, dass sich die zuvor definierten Strömungsverhältnisse in dem zu belüftenden Flugzeugbereich einstellen, d.h. keine für eine Mischlüftung charakteristischen Luftwalzen gebildet werden, bleiben die zuvor beschriebenen Vorteile, die sich bei der Verwendung des neuartijen Flugzeugklimatisierungssystems ergeben, vollständig erhalten. Gleichzeitig ermöglicht die Zufuhr von Hilfsluft mit einer geringfügig höheren Geschwindigkeit als die Zufuhrgeschwindigkeit der über den Lufteinlass eingeblasenen Luft und/oder einer geringfügig geringeren Temperatur als die Temperatur der über den Lufteinlass eingeblasenen Luft eine flexible Anpassung der Leistung des neuartijen Klimasystems an bestimmte Bedarfssituationen, beispielsweise im Bodenbetrieb des Flugzeugs. Dadurch wird stets, d.h. auch bei hohen Wärmelasten, eine ordnungsgemäße Wärmeabfuhr aus dem zu belüftenden Flugzeugbereich gewährleistet.

Darüber hinaus kann die Hilfssteuervorrichtung dazu eingerichtet sein, zu gewährleisten, dass die von der Hilfsluftbereitstellungseinrichtung bereitgestellte Hilfsluft über den im Bereich einer Seitenwand des zu belüftenden Flugzeugbereichs angeordneten Hilfslufteinlass mit einer derartigen Temperatur in den zu belüftenden Flugzeugbereich eingeblasen wird, dass sich in dem zu belüftenden Flugzeugbereich eine gewünschte Raumtemperatur einstellt.

Die Hilfssteuervorrichtung kann als separate Vorrichtung ausgebildet sein. Vorzugsweise wird die Hilfssteuereinheit jedoch zumindest teilweise durch Komponenten der Steuervorrichtung zur Steuerung der Geschwindigkeit und der Temperatur der über den Lufteinlass in den zu belüftenden Flugzeugbereich eintretenden Luft gebildet oder ist in diese Steuervorrichtung integriert.

Die Hilfssteuervorrichtung kann auch dazu eingerichtet sein, zu gewährleisten, dass die von der Hilfsluftbereitstellungseinrichtung bereitgestellte Hilfsluft über den im Bereich einer Seitenwand des zu belüftenden Flugzeugbereichs angeordneten Hilfslufteinlass mit einer derartigen Geschwindigkeit in den zu belüftenden Flugzeugbereich eintritt, dass sich in dem zu belüftenden Flugzeugbereich für eine Mischlüftung charakteristische Luftwalzen ausbilden und freie Konvektion in dem zu belüftenden Flugzeugbereich im Wesentlichen unterdrückt wird. Eine derartige Steuerung der Hilfsluftgeschwindigkeit kann in bestimmten Situationen, beispielsweise während sich das Flugzeug am Boden befindet, sinnvoll sein, wenn besonders hohe Wärmelasten aus dem zu belüftenden Flugzeugbereich abgeführt werden müssen.

Schließlich kann die Hilfssteuervorrichtung dazu eingerichtet sein, je nach Bedarf zu gewährleisten, dass die von der Hilfsluftbereitstellungseinrichtung bereitgestellte Hilfsluft über den im Bereich einer Seitenwand des zu belüftenden Flugzeugbereichs angeordneten Hilfslufteinlass mit einer derartigen Geschwindigkeit in den zu belüftenden Flugzeugbereich eintritt, dass sich die Luft in dem zu belüftenden Flugzeugbereich im Bereich einer durch die Anordnung des Hilfslufteinlasses definierten Ebene, d.h. in etwa auf der Höhe des Hilfslufteinlasses horizontal verteilt und an in dem zu belüftenden Flugzeugbereich vorhandenen Wärmequellen aufsteigt, oder dass die von der Hilfsluftbereitstellungseinrichtung bereitgestellte Hilfsluft über den Hilfslufteinlass mit einer derartigen Geschwindigkeit in den zu belüftenden Flugzeugbereich eintritt, dass sich in dem zu belüftenden Flugzeugbereich für eine Mischlüftung charakteristische Luftwalzen ausbilden. Dies ermöglicht eine besonders flexible Anpassung der Klimatisationsleistung des neuartijen Klimatisierungssystems an bestimmte Bedarfssituationen. Die Zufuhr von Hilfsluft über den Hilfslufteinlass auch kann besonders vorteilhaft für Aufheiz- oder Abkühlvorgänge Anwendung finden, bei denen keine Passagiere an Bord sind, z.B. bei der ersten Inbetriebnahme eines Flugzeugs an einem kalten oder heißen Tag.

Das neuartije Flugzeugklimatisierungssystem umfasst vorzugsweise ferner eine Hilfssteuervorrichtung, die dazu eingerichtet ist, zu gewährleisten, dass die von der Hilfsluftbereitstellungseinrichtung bereitgestellte Hilfsluft über einen im Bereich einer Decke des zu belüftenden Flugzeugbereichs angeordneten Hilfslufteinlass mit einer geringeren Geschwindigkeit in den zu belüftenden Flugzeugbereich eintritt als die über den Lufteinlass in den zu belüftenden Flugzeugbereich eintretende Luft. Vorzugweise ist die Hilfssteuervorrichtung dazu eingerichtet, die Geschwindigkeit der aus dem im Bereich einer Decke des zu belüftenden Flugzeugbereichs angeordneten Hilfslufteinlass austretenden Luft derart zu steuern, dass die Luft aus dem Hilfslufteinlass "herausrieselt" und dadurch auch im Wesentlich nur im Bereich der Decke und des Ganges des zu belüftenden Flugzeugbereichs wirksam ist.

Beispielsweise kann die Hilfssteuervorrichtung dazu eingerichtet sein, zu gewährleisten, dass die von der Hilfsluftbereitstellungseinrichtung bereitgestellte Hilfsluft über den im Bereich einer Decke des zu belüftenden Flugzeugbereichs angeordneten Hilfslufteinlass mit einer Geschwindigkeit von < 1m/s in den zu belüftenden Flugzeugbereich eintritt. Die Hilfssteuervorrichtung kann eine elektrische oder elektronische Steuereinheit zur Steuerung der Hilfslufitbereitstellungseinrichtung umfassen. Diese Steuereinheit kann die Hilfsluftbereitstellungseinrichtung so steuern, dass die Luft von der Hilfsluftbereitstellungseinrichtung mit einem gewünschten Druck in den Hilfszuluftkanal geleitet wird. Eine derartige Steuereinheit kann auch dazu eingesetzt werden, die Menge sowie die Feuchte der von der von der Hilfsluftbereitstellungseinrichtung bereitgestellten Luft wie gewünscht zu steuern. Alternativ oder zusätzlich dazu kann die Hilfssteuervorrichtung jedoch auch mechanische Komponenten wie z.B. Ventile, Drosseln, Blenden, etc. zur Einstellung des Luftdrucks im Hilfszuluftkanal aufweisen. Diese mechanischen Komponenten können elektronisch oder elektrisch gesteuert werden, wobei hierzu die elektrische oder elektronische Steuereinheit eingesetzt werden kann, die auch zur Steuerung der Hilfsluftbereitstellungseinrichtung verwendet wird.

Die Hilfssteuervorrichtung zur Steuerung der Geschwindigkeit von über einen im Bereich einer Decke des zu belüftenden Flugzeugbereichs angeordneten Hilfslufteinlass in den zu belüftenden Flugzeugbereich zuzuführenden Luft kann als separate Vorrichtung ausgebildet sein. Vorzugsweise wird die Hilfssteuereinheit jedoch zumindest teilweise durch Komponenten der Steuervorrichtung zur Steuerung der Geschwindigkeit und der Temperatur der über den Lufteinlass in den zu belüftenden Flugzeugbereich eintretenden Luft und/oder der Hilfssteuereinheit zur Steuerung der Geschwindigkeit von über einen im Bereich einer Seitenwand des zu belüftenden Flugzeugbereichs angeordneten Hilfslufteinlass in den zu belüftenden Flugzeugbereich zuzuführenden Luft gebildet oder ist in diese Steuervorrichtung integriert.

Die Hilfssteuervorrichtung zur Steuerung der Geschwindigkeit der über einen im Bereich einer Decke des zu belüftenden Flugzeugbereichs angeordneten Hilfslufteinlass in den zu belüftenden Flugzeugbereich zuzuführenden Luft kann auch dazu eingerichtet sein, zu gewährleisten, dass die von der Hilfsluftbereitstellungseinrichtung bereitgestellte Hilfsluft über den im Bereich einer Decke des zu belüftenden Flugzeugbereichs angeordneten Hilfslufteinlass mit einer Temperatur zugeführt wird, die geringer ist als die Temperatur der Luft in dem zu belüftenden Flugzeugbereich.

Bei dem neuartijen Flugzeugklimatisierungssystem ist es aufgrund der sich in dem zu belüftenden Flugzeugbereich einstellenden Strömungsverhältnisse möglich, einen Luftauslass zur Abfuhr von Abluft aus dem zu belüftenden Flugzeugbereich im Bereich einer Decke des zu belüftenden Flugzeugbereichs anzuordnen. Der Luftauslass kann beispielsweise durch einen Spalt gebildet werden, der in einer Deckenverkleidung des zu belüftenden Flugzeugbereichs ausgebildet ist. Je nach Bedarf, können jedoch auch mehrere Luftauslässe im Bereich einer Decke des zu belüftenden Flugzeugbereichs vorgesehen oder ein Deckenbereich des zu belüftenden Flugzeugbereichs luftdurchlässig ausgeführt sein. Alternativ oder zusätzlich dazu kann/können der Luftauslass/die Luftauslässe auch in im Deckenbereich des zu belüftenden Flugzeugbereichs angebrachten Lampen ausgebildet sein. Um eine ordnungsgemäße Abluftabfuhr über den Deckenbereich des zu belüftenden Flugzeugbereichs zu gewährleisten, sind der Bodenbereich sowie die Seitenbereiche des zu belüftenden Flugzeugbereichs vorzugsweise hinreichend luftdicht ausgeführt.

Der Luftauslass ist vorzugsweise über einen Verbindungskanal mit einem Druckregelventil zur Einstellung eines gewünschten Drucks in dem zu belüftenden Flugzeugbereich verbunden. Der Verbindungskanal erstreckt sich vorzugsweise entlang einer Flugzeughaut und folgt beispielsweise dem Verlauf eines Spants. Bei Bedarf können auch mehrere Druckregelventile über entsprechende Verbindungskanäle mit dem Luftauslass bzw. den Luftauslässen zur Abfuhr von Abluft aus dem zu belüftenden Flugzeugbereich verbunden sein.

Da der Luftauslass bei dem neuartijen Flugzeugklimatisierungssystem im Bereich einer Decke des zu belüftenden Flugzeugbereichs angeordnet ist, kann das Druckregelventil in einem Seitenbereich einer Flugzeugrumpfoberschale oder einem Seitenbereich der Flugzeugrumpfunterschale angeordnet sein. Ferner ist auch eine Positionierung des Druckregelventils in einer Druckkalotte oder eine Integration des Druckregelventils in einen bestehenden Abluftkanal möglich. In einem derartigen Fall muss der Strömungsquerschnitt des Druckregelventils lediglich so ausgelegt werden, dass sichergestellt wird, dass das Druckregelventil auch bei einem geringeren auf das Ventil wirkende Differenzdruck ordnungsgemäß funktioniert. Durch die Ausgestaltung des neuerhjeu Flugzeugklimatisierungssystems mit einem im Bereich einer Decke des zu belüftenden Flugzeugbereichs angeordneten Luftauslass wird somit eine deutlich höhere Flexibilität bei der Wahl der Position für das Druckregelventil bzw. die Druckregelventile erzielt.

Wenn das Druckregelventil bzw. die Druckregelventile zur Einstellung eines gewünschten Drucks in einem zu belüftenden und zu bedruckenden Flugzeugbereich bzw. allen zu belüftenden und zu bedruckenden Flugzeugbereichen nicht länger, wie bisher üblich, im Bereich des Bodens der Flugzeugrumpfunterschale angeordnet sein muss/müssen, muss der Bodenbereich der Flugzeugrumpfunterschale auch nicht mehr als Stauraum für mit dem Druckregelventil bzw. den Druckregelventilen verbundene Rohre verwendet werden, sondern ist einer alternativen Nutzung zugänglich. Beispielsweise kann dieser Bereich als zusätzlicher Frachtraum genutzt werden, der zur Gewichtsoptimierung seitlich anstelle herkömmlicher Prepregseitenbegrenzungswände auch aus einer brandsicheren Folie bestehende Seitenbegrenzungswände aufweisen kann. Ferner wird die Ausbildung eines ganz oder teilweise unventilierten Unterflurbereichs ermöglicht.

Darüber hinaus kann gegebenenfalls auf eine Isolierung der Flugzeugrumpfunterschale verzichtet werden, da es nicht länger erforderlich ist, im Bodenbereich der Flugzeugrumpfunterschale verlaufende Rohre vor zu tiefen Temperaturen zu schützen. Der Verzicht auf eine Isolierung der Flugzeugrumpfunterschale ist jedoch nur dann sinnvoll, wenn eine Auskühlung dieses Bereichs keine Rolle spielt. Dies ist beispielsweise dann der Fall, wenn die Raumtemperatur in einem im Bereich der Flugzeugrumpfunterschale angeordneten Frachtraum ein geringes Niveau haben kann/soll und im Bereich der Flugzeugrumpfunterschale auch keine Ruheräume für Besatzungsmitglieder vorgesehen sind. Um einer zu starken Auskühlung einer nicht isolierten Flugzeugrumpfunterschale entgegenzuwirken, kann gegebenenfalls auch erwärmte Luft aus der Passagierkabine in die Flugzeugrumpfunterschale bzw. einen im Bereich der Flugzeugrumpfunterschale angeordneten Frachtraum geleitet werden. Der Verzicht auf eine Isolierung der Flugzeugrumpfunterschale ermöglicht eine vorteilhafte Gewichtsreduktion. Darüber hinaus wird der z.B. als Frachtraum nutzbare Raum im Bereich der Flugzeugrumpfunterschale vergrößert.

Wenn die Flugzeugrumpfunterschale nicht isoliert ist, wird vorzugsweise auf eine Verbindung zwischen einem in der nicht isolierten Flugzeugrumpfunterschale angeordneten Unterflurbereich und der Passagierkabine verzichtet. Infolgedessen ist jedoch auch kein Druckausgleich zwischen dem Unterflurbereich und der Kabine mehr möglich. Um im Falle eines plötzlichen Druckabfalls im Unterflurbereich, beispielsweise in einem im Unterflurbereich angeordneten Frachtraum oder der Kabine einen schnellen Druckausgleich zu ermöglichen und eine Beschädigung der Rumpfstruktur zu verhindern, ist vorzugsweise eine bewegliche Druckausgleichsvorrichtung vorhanden, die im Bedarfsfall für einen Druckausgleich zwischen dem Unterflurbereich und der Kabine sorgt. Die Druckausgleichsvorrichtung kann beispielsweise durch eine bewegliche Klappe oder ein Überdruckventil gebildet werden, die/das zur Gewährleistung eines Druckausgleichs eine Verbindung zwischen dem Unterflurbereich und der Kabine öffnet, wenn eine vorbestimmte Differenz zwischen dem Druck im Unterflurbereich und dem Druck in der Kabine überschritten wird.

Da, wie bereits erläutert, zwischen einem in einer nicht isolierten Flugzeugrumpfunterschale im Unterflurbereich angeordneten Frachtraum und der Flugzeugpassagierkabine keine Verbindung besteht, wird bei einer derartigen Anordnung auch verhindert, dass im Frachtraum entstehende Gase oder Gerüche in die Passagierkabine gelangen. Eine besonders gute Entlüftung des Frachtraums wird gewährleistet, wenn der Frachtraum über eine z.B. in Form einer Venturieinrichtung oder einer Klappe ausgebildete Entlüftungseinrichtung mit der Außenatmosphäre verbunden ist.

Die obigen Aspekte wurden hier im Zusammenhang mit dem neuartijen Flugzeugklimatisierungssystem geschildert. Sie können jedoch auch unabhängig von dem erfindungsgemäßen Flugzeugklimatisierungssystem und auch unabhängig voneinander realisiert werden. Beispielsweise kann ein im Bereich einer Decke eines zu belüftenden Flugzeugbereichs angeordneter Luftauslass zur Abfuhr von Abluft aus dem zu belüftenden Flugzeugbereich auch dann über einen Verbindungskanal mit einem in einem Seitenbereich einer Flugzeugrumpfoberschale oder einem Seitenbereich einer Flugzeugrumpfunterschale angeordneten Druckregelventil zur Einstellung eines gewünschten Drucks in dem zu belüftenden Flugzeugbereich verbunden sein, wenn der Luftauslass nicht Bestandteil eines neuartijen Flugzeugklimatisierungssystems, sondern beispielsweise eine Komponente eines nach dem Prinzip der Mischlüftung arbeitenden Flugzeugklimatisierungssystems ist. In ähnlicher Weise kann auch unabhängig von der Anwesenheit eines neuartijen Flugzeugklimatisierungssystems auf die Isolierung einer Flugzeugrumpfunterschale verzichtet, eine bewegliche Druckausgleichseinrichtung zwischen einem Unterflurbereich und einer Passagierkabine vorgesehen und/oder ein Frachtraum mit einer Entlüftungseinrichtung zur Verbindung des Frachtraums mit der Außenatmosphäre ausgestattet werden.

Das neuartijen Flugzeugklimatisierungssystem umfasst vorzugsweise ferner einen mit dem Luftauslass verbundenen Abluftkanal, der durch den Luftauslass aus dem zu belüftenden Flugzeugbereich abgeführte Abluft in Richtung einer Luftsenke leitet. Der Abluftkanal erstreckt sich vorzugsweise zumindest abschnittsweise entlang des Deckenbereich des zu belüftenden Flugzeugbereichs. In dem Abluftkanal kann eine Saugeinrichtung, wie z.B. ein Ventilator oder ein Kompressor angeordnet sein, um die Abluft aktiv aus dem zu belüftenden Flugzeugbereich zu saugen. Alternativ dazu kann der Abluftkanal jedoch auch passiv betrieben werden. In diesem Fall entweicht die Abluft infolge eines Differenzdrucks zwischen dem zu belüftenden Flugzeugbereich und dem Abluftkanal in den Abluftkanal, um über den Abluftkanal der Luftsenke zugeführt zu werden.

Wenn der zu belüftende Flugzeugbereich durch die Passagierkabine oder einen Abschnitt der Passagierkabine gebildet wird, kann der Abluftkanal beispielsweise durch eine Oberschale des Flugzeugrumpfs, eine Deckenverkleidung der Passagierkabine bildende Paneelelemente sowie seitliche Trennelemente oder in der Passagierkabine angeordnete Gepäckfächer begrenzt werden. Alternativ dazu kann der Abluftkanal jedoch auch durch ein Rohr gebildet werden, das sich vorzugsweise entlang eines Deckenbereichs des zu belüftenden Flugzeugbereichs erstreckt. Eine weitere Möglichkeit besteht darin, die Abluft durch lufttechnisch miteinander verbundene Gepäckfächer abzuführen und Beleuchtungseinrichtungen dabei als Einlass auszubilden.

In dem Abluftkanal kann sich an von der Abluft überströmten kalten Oberflächen Kondenswasser bilden. Um zu verhindern, dass dieses Kondenswasser in den zu belüftenden Flugzeugbereich oder einen anderen Bereich des Flugzeugs tropft oder eindringt, ist in dem Abluftkanal vorzugsweise eine Kondenswasserschutzvorrichtung angeordnet. Die Kondenswasserschutzvorrichtung sammelt sich in dem Abluftkanal bildendes Kondenswasser und sorgt dafür, dass es entweder abgeleitet wird oder in der Umgebungsluft verdunstet. Beispielsweise kann die Kondenswasserschutzvorrichtung durch ein in dem Abluftkanal angeordnetes Nadelfilz gebildet werden.

Vorzugsweise ist der Abluftkanal so gestaltet und angeordnet, dass den Abluftkanal durchströmende Abluft in Wärmekontakt mit wärmeerzeugenden Komponenten gebracht wird, um Wärme von den wärmeerzeugenden Komponenten abzuführen. Die wärmeerzeugenden Komponenten können beispielsweise im Deckenbereich des zu belüftenden Flugzeugbereichs installierte Systeme, wie z.B. Beleuchtungselemente oder elektronische Elemente sein. Eine derartige Ausgestaltung des Abluftkanals ermöglicht eine optimale Ausnutzung der in der Abluft gespeicherten Kühlenergie, die sich insbesondere bei hohen Wärmelasten vorteilhaft auswirkt.

Das neuartije Flugzeugklimatisierungssystem umfasst vorzugsweise ferner einen mit dem Luftauslass und/oder einem separat von dem Luftauslass ausgebildeten Rezirkulationsauslass verbundenen Rezirkulationskanal, der dazu dient Abluft aus dem zu belüftenden Flugzeugbereich in die Luftbereitstellungseinrichtung und/oder die Hilfsluftbereitstellungseinrichtung zurückzuführen. Beispielsweise kann der Rezirkulationskanal von dem Abluftkanal abzweigen. Alternativ dazu kann der Abluftkanal aber auch lediglich zur Abluftabfuhr dienen und der Rezirkulationskanal mit einem separat von dem Luftauslass ausgebildeten Rezirkulationsauslass bzw. mit separat von dem Luftauslass ausgebildeten Rezirkulationsauslässen verbunden sein. Der Rezirkulationsauslass bzw. die Rezirkulationsauslässe können beispielsweise im Bereich einer Seitenwand des zu belüftenden Flugzeugbereichs angeordnet sein. Rezirkulationsluft, die über einen im Bereich einer Seitenwand des zu belüftenden Flugzeugbereichs angeordneten Rezirkulationsauslass aus dem zu belüftenden Flugzeugbereich abgeführt wird, ist üblicherweise kühler als über den Deckenbereich des zu belüftenden Flugzeugbereichs abgeführte Luft. Die Nutzung kühlerer Luft als Rezirkulationsluft bietet energetische Vorteile, die sich insbesondere bei der Auslegung der Klimaaggregate vorteilhaft auswirken. Über den Rezirkulationskanal zurückgeführte Abluft kann beispielsweise in einen Mischer der Luftbereitstellungseinrichtung und/oder der Hilfsluftbereitstellungseinrichtung geleitet werden.

Bei einem erfindungsgemäßen Verfahren zur Klimatisierung zumindest eines Teilbereichs eines Flugzeugs wird mittels einer Luftbereitstellungseinrichtung, die, wie oben ausgeführt, gestaltet sein kann, einem zu belüftenden Bereich eines Flugzeugs mit einer gewünschten Temperatur, einem gewünschten Druck und einer gewünschten Feuchte sowie in einer gewünschten Menge zuzuführende Luft bereitgestellt. Die von der Luftbereitstellungseinrichtung bereitgestellte Luft wird von der Luftbereitstellungseinrichtung durch einen Zuluftkanal zu einem bodennah in den zu belüftenden Flugzeugbereich mündenden Lufteinlass geleitet. Eine Steuervorrichtung gewährleistet, dass die von der Luftbereitstellungseinrichtung bereitgestellte Luft über den Lufteinlass mit einer derartigen Geschwindigkeit in den zu belüfienden Flugzeubereich eintritt, dass sich die Luft in dem zu belüftenden über die gesamle in Bodennähe fläche verteilt und eine bodennane Klimatisations Ruftschilt bildet und an in dem zu belüftenden Flugzeugbereich vorhandenen Wärmequellen durch freie Konvekan aufsteigt. Darüber hinaus gewährleistet die Steuervorrichtung, dass die von der Luftbereitstellungseinrichtung bereitgestellte Luft über den Lufteinfass mit einer derarti- gen Temperatur in den zu belüftenden Flugzeugbereich eintritt, dass sich in dem zu belüftenden Flugzeugbereich eine gewünschte Raumtemperatur einstellt.

Die Steuervorrichtung gewährleistet, dass die von der Luftbereitstellungseinrichtung bereitgestellte Luft über den Lufteinlass mit einer Geschwindigkeit von 0,1 bis 0,5 m/s in den zu belüftenden Flugzeugbereich eintritt.

Bei einer bevorzugten Ausführungsform des erfindungsgemäßen Verfahrens wird die Luft durch einen Lufteinlass in den zu belüftenden Flugzeugbereich eingeblasen, der im Bereich eines Bodens des zu belüftenden Flugzeugbereichs angeordnet ist. Zusätzlich oder alternativ dazu kann die Luft jedoch auch durch einen Lufteinlass in den zu belüftenden Flugzeugbereich eingeblasen werden, der in einem bodennahen Bereich einer Seitenwand des zu belüftenden Flugzeugbereichs angeordnet ist. Die Luft kann durch lediglich einen Lufteinlass in den zu belüftenden Flugzeugbereich eingeblasen werden. Alternativ dazu ist es jedoch auch möglich, die Luft durch eine Mehrzahl von Lufteinlässen in den zu belüftenden Flugzeugbereich einzublasen.

Bei einer bevorzugten Weiterbildung des erfindungsgemäßen Verfahrens wird zusätzlich mittels einer Hilfsluftbereitstellungseinrichtung dem zu belüftenden Bereich des Flugzeugs mit einer gewünschten Temperatur, einem gewünschten Druck und einer gewünschten Feuchte sowie in einer gewünschten Menge zuzuführende Hilfsluft bereitgestellt. Die Hilfsluft kann von der Hilfsluftbereitstellungseinrichtung durch einen Hilfszuluftkanal zu einem in den zu belüftenden Flugzeugbereich mündenden Hilfslufteinlass geleitet werden.

Die Hilfsluft kann über einen im Bereich einer Seitenwand und/oder einen im Bereich einer Decke des zu belüftenden Flugzeugbereichs angeordneten Hilfslufteinlass in den zu belüftenden Flugzeugbereich eingeblasen werden.

Vorzugsweise gewährleistet eine Hilfssteuervorrichtung, dass die von der Hilfsluftbereitstellungseinrichtung bereitgestellte Hilfsluft über einen im Bereich einer Seitenwand des zu belüftenden Flugzeugbereichs angeordneten Hilfslufteinlass mit einer derartigen Geschwindigkeit in den zu belüftenden Flugzeugbereich eintritt, dass sich die Luft in dem zu belüftenden Flugzeugbereich im Bereich einer durch die Anordnung des Hilfszulufteinlasses definierten Ebene verteilt und an in dem zu belüftenden Flugzeugbereich vorhandenen Wärmequellen aufsteigt. Beispielsweise gewährleistet die Hilfsteuereinheit, dass die von der Hilfsluftbereitstellungseinrichtung bereitgestellte Hilfsluft über den im Bereich einer Seitenwand des zu belüftenden Flugzeugbereichs angeordneten Hilfslufteinlass mit einer Geschwindigkeit von maximal 1 m/s in den zu belüftenden Flugzeugbereich eintritt.

Ferner gewährleistet die Hilfssteuervorrichtung vorzugsweise, dass die von der Hilfsluftbereitstellungseinrichtung bereitgestellte Hilfsluft über den im Bereich einer Seitenwand des zu belüftenden Flugzeugbereichs angeordneten Hilfslufteinlass mit einer derartigen Temperatur in den zu belüftenden Flugzeugbereich eintritt, dass sich in dem zu belüftenden Flugzeugbereich eine gewünschte Raumtemperatur einstellt.

Die Hilfssteuervorrichtung kann auch gewährleisten, dass die von der Hilfsluftbereitstellungseinrichtung bereitgestellte Hilfsluft über den im Bereich einer Seitenwand des zu belüftenden Flugzeugbereichs angeordneten Hilfslufteinlass mit einer derartigen Geschwindigkeit in den zu belüftenden Flugzeugbereich eintritt, dass sich in dem zu belüftenden Flugzeugbereich für eine Mischlüftung charakteristische Luftwalzen ausbilden und freie Konvektion in dem zu belüftenden Flugzeugbereich im Wesentlichen unterdrückt wird. Schließlich kann die Hilfssteuervorrichtung auch gewährleisten, dass die von der Hilfsluftbereitstellungseinrichtung bereitgestellte Hilfsluft, je nach Bedarf über den im Bereich einer Seitenwand des zu belüftenden Flugzeugbereichs angeordneten Hilfslufteinlass mit einer derartigen Geschwindigkeit in den zu belüftenden Flugzeugbereich eintritt, dass sich die Luft in dem zu belüftenden Flugzeugbereich im Bereich einer durch die Anordnung des Hilfslufteinlasses definierten Ebene, d.h. in etwa auf der Höhe des Hilfslufteinlasses horizontal verteilt und an in dem zu belüftenden Flugzeugbereich vorhandenen Wärmequellen aufsteigt, oder dass die von der Hilfsluftbereitstellungseinrichtung bereitgestellte Hilfsluft über den Hilfslufteinlass mit einer derartigen Geschwindigkeit in den zu belüftenden Flugzeugbereich eintritt, dass sich in dem zu belüftenden Flugzeugbereich für eine Mischlüftung charakteristische Luftwalzen ausbilden.

Vorzugsweise erfolgt die Bereitstellung von Hilfsluft durch die Hilfsluftbereitstellungseinrichtung und die Zufuhr von Hilfsluft in den zu belüftenden Flugzeugbereich nur in ausgewählten Situationen, beispielsweise dann, wenn eine besonders effektive Belüftung des zu belüftenden Flugzeugbereichs erforderlich ist.

Vorzugsweise gewährleistet eine Hilfssteuervorrichtung ferner, dass die von der Hilfsluftbereitstellungseinrichtung bereitgestellte Hilfsluft über einen im Bereich einer Decke des zu belüftenden Flugzeugbereichs angeordneten Hilfslufteinlass mit einer geringeren Geschwindigkeit in den zu belüftenden Flugzeugbereich eintritt als die über den Lufteinlass in den zu belüftenden Flugzeugbereich eintretende Luft. Vorzugweise steuert die Hilfssteuervorrichtung die Geschwindigkeit der aus dem im Bereich einer Decke des zu belüftenden Flugzeugbereichs angeordneten Hilfslufteinlass austretenden Luft derart, dass die Luft aus dem Hilfslufteinlass "herausrieselt" und dadurch auch im Wesentlich nur im Bereich der Decke und des Ganges des zu belüftenden Flugzeugbereichs wirksam ist.

Beispielsweise kann die Hilfssteuervorrichtung gewährleisten, dass die von der Hilfsluftbereitstellungseinrichtung bereitgestellte Hilfsluft über den im Bereich einer Decke des zu belüftenden Flugzeugbereichs angeordneten Hilfslufteinlass mit einer Geschwindigkeit von < 1m/s in den zu belüftenden Flugzeugbereich eintritt.

Die Hilfssteuervorrichtung zur Steuerung der Geschwindigkeit der über einen im Bereich einer Decke des zu belüftenden Flugzeugbereichs angeordneten Hüfslufteinlass in den zu belüftenden Flugzeugbereich zuzuführenden Luft gewährleistet vorzugsweise ferner, dass die von der Hilfsluftbereitstellungseinrichtung bereitgestellte Hilfsluft über den im Bereich einer Decke des zu belüftenden Flugzeugbereichs angeordneten Hilfslufteinlass mit einer Temperatur zugeführt wird, die geringer ist als die Temperatur der Luft in dem zu belüftenden Flugzeugbereich.

Vorzugsweise wird Abluft aus dem zu belüftenden Flugzeugbereich durch einen im Bereich einer Decke des zu belüftenden Flugzeugbereichs angeordneten Luftauslass, der über einen Verbindungskanal mit einem Druckregelventil verbunden ist, aus dem zu belüftenden Flugzeugbereich abgeführt. Zur Einstellung eines gewünschten Drucks in dem zu belüftenden Flugzeugbereich kann die Abluft über das Druckregelventil an die Außenatmosphäre abgegeben werden.

Vorzugsweise wird die Abluft aus dem zu belüftenden Flugzeugbereich bei Bedarf zur Einstellung eines gewünschten Drucks in dem zu belüftenden Flugzeugbereich über ein in einem Seitenbereich einer Flugzeugrumpfoberschale oder einem Seitenbereich einer Flugzeugrumpfunterschale angeordnetes Druckregelventil an die Außenatmosphäre abgeführt.

Die Abluft aus dem zu belüftenden Flugzeugbereich kann durch einen mit dem Luftauslass verbundenen Abluftkanal, der sich zumindest abschnittsweise entlang des Deckenbereichs des zu belüftenden Flugzeugbereichs erstreckt, in Richtung einer Luftsenke geleitet werden.

Kondenswasser in dem Abluftkanal wird vorzugsweise mittels einer Kondenswasserschutzvorrichtung aufgefangen.

Den Abluftkanal durchströmende Abluft kann in Wärmekontakt mit im Deckenbereich des zu belüftenden Flugzeugbereichs installierten wärmeerzeugenden Komponenten gebracht werden, um Wärme von den wärmeerzeugenden Komponenten abzuführen.

Durch den Luftauslass und/oder einen separat von dem Luftauslass ausgebildeten Rezirkulationsauslass aus dem zu belüftenden Flugzeugbereich abgeführte Abluft kann über einen mit dem Luftauslass und/oder dem Rezirkulationsauslass verbundenen Rezirkulationskanal in die Luftbereitstellungseinrichtung und/oder die Hilfsluftbereitstellungseinrichtung zurückgeführt werden.

Bevorzugte Ausführungsformen der vorliegenden Erfindung werden nun anhand der beigefügten schematischen Zeichnungen näher erläutert, von denen
- Figur 1: einen Querschnitt eines Flugzeugrumpfs zeigt, in dem die Strömungsverhältnisse veranschaulicht sind, die sich einstellen, wenn eine Passagierkabine mittels eines aus dem Stand der Technik bekannten, nach dem Prinzip der Mischlüftung arbeitenden Klimatisierungssystems belüftet wird,
- Figur 2: einen Querschnitt einer Flugzeugpassagierkabine zeigt, die mittels einer ersten Ausführungsform eines neuechgen Flugzeugklimatisierungssystems belüftet wird,
- Figur 3: einen Querschnitt einer Flugzeugpassagierkabine zeigt, die mittels einer zweiten Ausführungsform des neuerhjeu Flugzeugklimatisierungssystems belüftet wird,
- Figur 4: einen Querschnitt einer Flugzeugpassagierkabine zeigt, die mittels einer dritten Ausführungsform des neuerhjeu Flugzeugklimatisierungssystems belüftet wird,
- Figur 5: einen Querschnitt einer Flugzeugpassagierkabine zeigt, die mittels einer vierten Ausführungsform des neuartijen Flugzeugklimatisierungssystems belüftet wird,
- Figur 6: einen Querschnitt einer Flugzeugpassa ierkabine zeigt, die mittels einer fünften Ausführungsform des neuartijen Flugzeugklimatisierungssystems belüftet wird,
- Figur 7: einen Querschnitt einer Flugzeugpassagierkabine zeigt, die mittels einer sechsten Ausführungsform dese nneuartijen Flugzeugklimatisierungssystems belüftet wird,
- Figur 8: eine dreidimensionale Darstellung eines Flugzeugrumpfabschnitts mit einer Flugzeugpassagierkabine zeigt, die mittels der vierten Ausführungsform des neuartijen Flugzeugklimatisierungssystems belüftet wird,
- Figur 9: eine schematische Darstellung eines Abluftkanals des neuartijen Flugzeugklimatisierungssystems zeigt,
- Figur 10: eine Querschnittsdarstellung des in Figur 9 veranschaulichten Abluftkanals zeigt,
- Figur 11: eine dreidimensionale Darstellung eines Flugzeugrumpfabschnitts zeigt, in der die Anordnung eines Druckregelventils veranschaulicht ist,
- Figur 12: einen Querschnitt eines Flugzeugrumpfs zeigt, in dem unter anderem die Anordnung einer beweglichen Druckausgleichsvorrichtung und eines Frachtraumluftauslasses veranschaulicht sind, und
- Figur 13: ein schematisches Diagramm des Grundaufbaus und der Funktionweise eines neuartijen Flugzeugklimatisierungssystems zeigt.

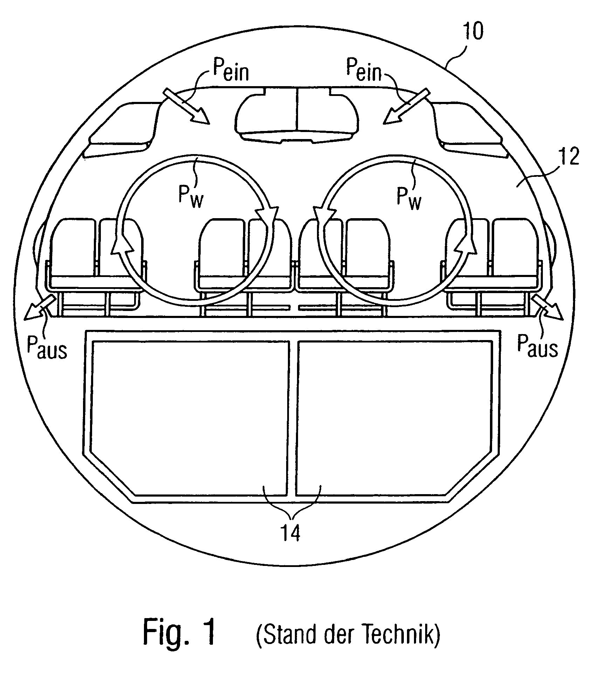

Figur 1 zeigt einen Querschnitt eines Flugzeugrumpfs 10, in dem eine Passagierkabine 12 und ein Frachtraum 14 angeordnet sind. Die Passagierkabine 12 wird mittels eines aus dem Stand der Technik bekannten und nach dem Prinzip der Mischfüftung arbeitenden Flugzeugklimatisierungssystems belüftet und bedruckt. Dabei wird Luft durch im Deckenbereich der Passagierkabine 12 angeordnete Lufteinlässe mit einer hohen Geschwindigkeit von ca. 0,7 bis 3 m/s und einem hohen Impuls in die Passagierkabine 12 eingeblasen (siehe Pfeile Pₑᵢₙ). Infolge des hohen Impulses und der hohen Geschwindigkeit der eingeblasenen Luft bilden sich Luftwalzen (Pfeile P_{W}) in der Passagierkabine 12 aus, die für eine nahezu homogene Durchmischung der zugeführten Luft mit der Raumluft sorgen, wobei durch Wärmequellen sowie kalte oder warme Oberflächen induzierte freie Konvektion durch die erzwungene Luftwalzenströmung dominiert wird. Die Abluftabfuhr aus der Passagierkabine 12 erfolgt durch im Bodenbereich der Passagierkabine vorgesehene Luftauslässe (Pfeile Pₐᵤₛ).

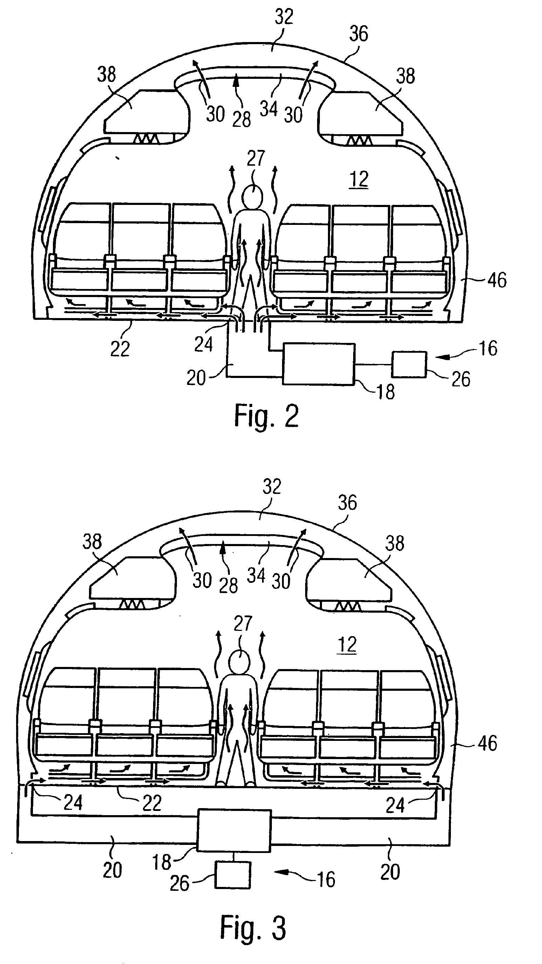

Im Gegensatz dazu zeigt Figur 2 einen Querschnitt einer Flugzeugpassagierkabine 12, die mittels einer ersten Ausführungsform eines Flugzeugklimatisierungssystems 16 belüftet und bedruckt wird. Das Flugzeugklimatisierungssystem 16 umfasst eine Luftbereitstellungseinrichtung 18, die über einen Zuluftkanal 20 mit einer Vielzahl von im Bereich eines Bodens 22 der Passagierkabine 12 angeordneten Lufteinlässen 24 verbunden ist. Die Luftbereitstellungseinrichtung 18 umfasst einen von Triebswerkszapfluft gespeisten Verdichter sowie einen dem Verdichter nachgeschalteten Mischer. Die von dem Verdichter bereitgestellte Frischluft hat üblicherweise eine Temperatur, die der tiefsten Solltemperatur eines von dem Flugzeugklimatisierungssystem 16 belüfteten Flugzeugbereichs entspricht. In dem Mischer kann die Verdichterfrischluft, je nach Bedarf, mit Rezirkulationsluft gemischt werden. Ferner kann der Luft bei Bedarf stromabwärts des Mischers zusätzliche Heißluft zugemischt werden.

Die Luftbereitstellungseinrichtung 18 wird mittels einer elektronischen Steuereinheit 26 gesteuert. Die elektronische Steuereinheit 26 ist dazu eingerichtet, die Luftbereitstellungseinrichtung 18 zu steuern und zu gewährleisten, dass die von der Luftbereitstellungseinrichtung 18 bereitgestellte Luft einen derartigen Druck aufweist und sich in dem Zuluftkanal 20 ein derartiger Luftdruck aufbaut, dass die Luft über die einen konstanten Strömungsquerschnitt aufweisenden Lufteinlässe 24 mit einer derartigen Geschwindigkeit in die Passagierkabine 12 eingeblasen wird, dass sich die Luft gleichmäßig im Bereich des Bodens 22 der Passagierkabine 12 verteilt und nach dem Prinzip der freien Konvektion an in der Passagierkabine 12 vorhandenen Wärmequellen aufsteigt. Mit anderen Worten, die elektronische Steuereinheit 26 steuert die Luftbereitstellungseinrichtung 28 und den Druck im Zuluftkanal 20 derart, dass die über die Lufteinlässe 24 in die Kabine 12 eingeblasene Luft in der Kabine 12 das in der Figur 2 veranschaulichte Strömungsmuster bildet. In den Figuren ist als Beispiel für eine Wärmequelle jeweils eine Person 27 dargestellt.

Da die Lufteinlässe 24 einen konstanten Strömungsquerschnitt aufweisen, erfolgt die Steuerung der Geschwindigkeit der über die Lufteinlässe 24 in die Passagierkabine 12 eingeblasenen Luft über die Steuerung des Drucks im Zuluftkanal 20. Die Einstellung des gewünschten Strömungsmusters in der Passagierkabine 12 ist gewährleistet, wenn die von der Luftbereitstellungseinrichtung 18 bereitgestellte Luft über die Lufteinlässe 24 mit einer Geschwindigkeit von 0,1 bis 0,5 m/s in die Passagierkabine 12 eingeblasen wird.

Die Luftbereitstellungseinrichtung 18 kann im energetisch effizienten Betrieb lediglich einen limitierten Luftvolumenstrom bereitstellen. Infolgedessen kann die Raumtemperatur in der Passagierkabine 12 nur in begrenztem Maße durch eine entsprechende Anpassung des der Passagierkabine 12 zugeführten Luftvolumenstroms gesteuert werden. Die elektronische Steuereinheit 26 ist daher ferner dazu eingerichtet, die Luftbereitstellungseinrichtung 18 so zu steuern, dass die von der Luftbereitstellungseinrichtung 18 bereitgestellte Luft über die Lufteinlässe 24 mit einer derartigen Temperatur in die Passagierkabine 12 eingeblasen wird, dass sich in der Passagierkabine 12 die gewünschte Raumtemperatur einstellt. D.h., die Raumtemperatursteuerung in der Passagierkabine 12 erfolgt durch eine entsprechende Temperatursteuerung der von der Luftbereitstellungseinrichtung 18 bereitgestellten Luft.

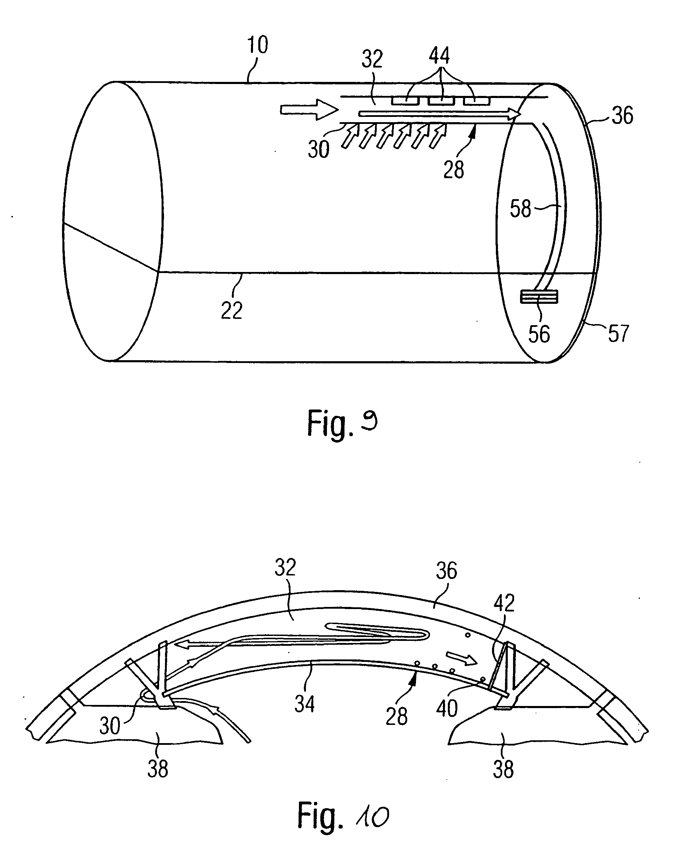

Die Begrenzungsflächen der Passagierkabine 12 im Bereich des Bodens 22 und der Seitenwände sind hinreichend luftdicht. Die Abluftabfuhr aus der Passagierkabine 12 kann daher über im Bereich der Decke 28 der Passagierkabine 12 angeordnete spaltförmige Luftauslässe 30 erfolgen. Alternativ dazu kann die Decke 28 der Passagierkabine 12 auch teilweise oder vollständig luftdurchlässig ausgebildet sein. Die Luftauslässe 30 münden in einen Abluftkanal 32. Wie insbesondere aus den Figuren 9 und 10 ersichtlich ist, erstreckt sich der Abluftkanal 32 entlang einer Längsachse des Flugzeugrumpfs 10 im Bereich der Decke 28 der Passagierkabine 12 und wird durch ein eine Deckenverkleidung der Passagierkabine 12 bildendes Paneel 34, eine Flugzeugrumpfoberschale 36 sowie in der Passagierkabine 12 angeordnete Gepäckfächer 38 begrenzt. Der Abluftkanal 32 leitet durch die Luftauslässe 30 aus der Passagierkabine 12 austretenden Abluft in Richtung einer Luftsenke.

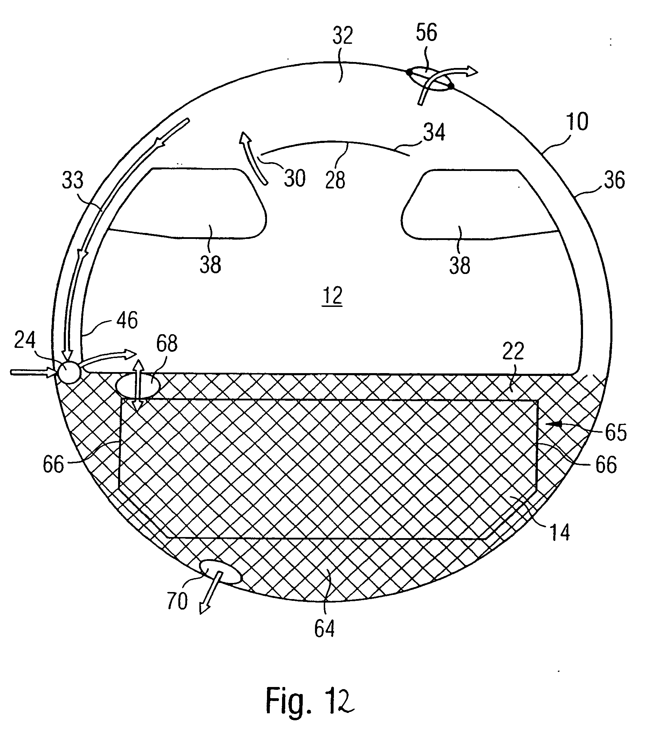

In dem Abluftkanal 32 können sich an von der Abluft überströmten kalten Oberflächen Kondenswassertropfen 40 (siehe Figur 10) bilden. Um zu verhindern, dass Kondenswasser aus dem Abluftkanal 32 in die Passagierkabine 12 tropft, ist in dem Abluftkanal 32 eine in Form eines Nadelfilzes ausgebildete Kondenswasserschutzvorrichtung 42 angeordnet. Darüber hinaus veranschaulicht die Figur 10, dass in dem Abluftkanal 32 wärmeerzeugende Komponenten 44, wie z.B. Beleuchtungselemente angeordnet sind, die von der Abluft überströmt werden und dabei Wärme an die Abluft abgeben. Schließlich zweigt von dem Abluftkanal 32 ein in Figur 12 dargestellter Rezirkulationskanal 33 ab, der den Abluftkanal 32 mit dem Mischer der Luftbereitstellungseinrichtung 18 verbindet.

Figur 3 zeigt eine Querschnittsansicht einer Flugzeugpassagierkabine 12, die mittels einer zweiten Ausführungsform des Flugzeugklimatisierungssystems 16 belüftet und bedruckt wird. Die in Figur 3 gezeigte zweite Ausführungsform des Flugzeugklimatisierungssystems 16 unterscheidet sich von der in Figur 2 veranschaulichten ersten Ausführungsform dadurch, dass die Lufteinlässe 24 nicht im Bereich des Bodens 22 der Passagierkabine 12 angeordnet, sondern in einem bodennahen Bereich einer Seitenwand 46 der Passagierkabine 12 ausgebildet sind. Die Lufteinlässe 24 sind über entsprechend ausgestaltete Zuluftkanäle 20 mit der Luftbereitstellungseinrichtung 18 verbunden. Im Übrigen entsprechen der Aufbau und die Funktionsweise des in Figur 3 gezeigten Flugzeugklimatisierungssystems 16 dem Aufbau und der Funktionsweise der Anordnung gemäß Figur 2.

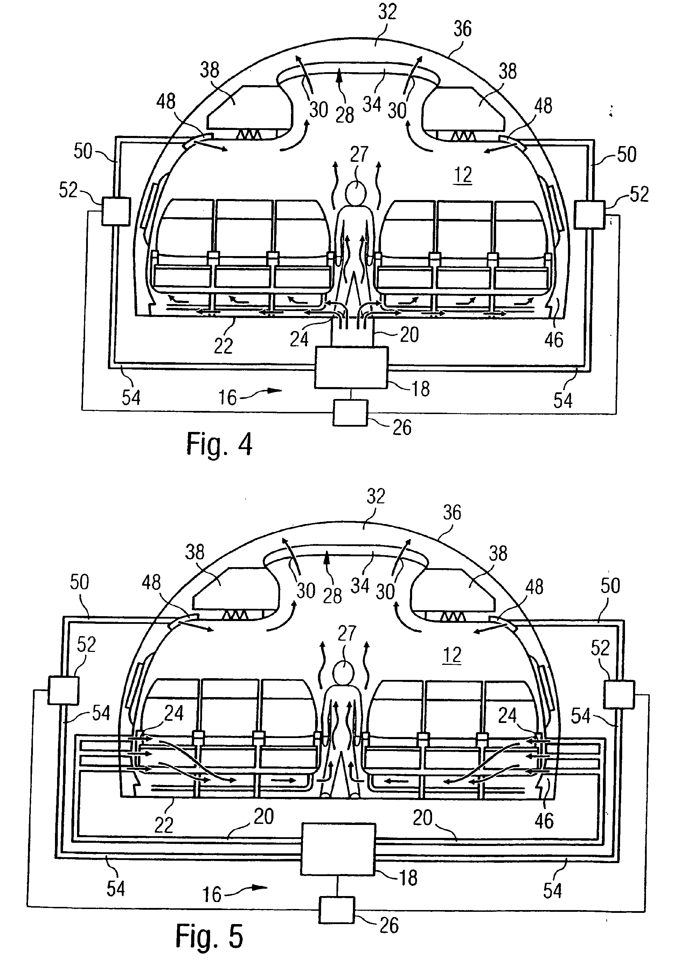

Figur 4 zeigt eine Querschnittsansicht einer Flugzeugpassagierkabine 12, die mittels einer dritten Ausführungsform des Flugzeugklimatisierungssystems 16 belüftet wird. Die in Figur 4 gezeigte dritte Ausführungsform des Flugzeugklimatisierungssystems 16 unterscheidet sich von der in Figur 2 veranschaulichten ersten Ausführungsform dadurch, dass unterhalb der Gepäckfächer 38 in den Seitenwänden 46 der Passagierkabine 12 eine Mehrzahl von Hüfslufteinlässen 48 ausgebildet ist. Die Hilfslufteinlässe 48 sind jeweils mit einem Hilfszuluftkanal 50 verbunden. Jeder Hilfszuluftkanal 50 ist an eine Hilfsluftbereitstellungseinrichtung 52 angeschlossen, die ihrerseits über einen entsprechenden Anschlusskanal 54 mit der Luftbereitstellungseinrichtung 18 in Verbindung steht. Die Hilfsluftbereitstellungseinrichtung 52 umfasst eine beispielsweise in Form eines Ventils ausgebildete Druckregelvorrichtung sowie eine Temperaturregelvorrichtung. Infolgedessen ist die Hilfsluftbereitstellungseinrichtung dazu in der Lage, Hilfsluft bereitzustellen, die eine gewünschte Temperatur sowie einen gewünschten Druck aufweist, wobei sich die Temperatur und der Druck der von der Hilfsluftbereitstellungseinrichtung 52 bereitgestellten Hilfsluft bei Bedarf vom Druck und der Temperatur der von der Luftbereitstellungseinrichtung 18 bereitgestellten Luft unterscheiden kann.

Die Hilfsluftbereitstellungseinrichtung 52 wird, ebenso wie die Luftbereitstellungseinrichtung 18, mittels der elektronischen Steuereinheit 26 gesteuert. In dem in Figur 4 veranschaulichten Betriebsfall des Flugzeugklimatisierungssystems 16 steuert die elektronische Steuereinheit 26 die Hilfsluftbereitstellungseinrichtung 52 und den Druck im Hilfszuluftkanal 50 derart, dass die von der Hilfsluftbereitstellungseinrichtung 52 bereitgestellte Hilfsluft über die Hilfslufteinlässe 48 mit einer derartigen Geschwindigkeit in die Flugzeugpassagierkabine 12 eingeblasen wird, dass sich die Luft in der Kabine 12 im Bereich einer durch die Anordnung der Hilfslufteinlässe 48 definierten Ebene verteilt und an in der Passagierkabine 12 vorhandenen Wärmequellen aufsteigt. Um zu gewährleisten, dass sich das in Figur 4 gezeigte Strömungsverhalten der über die Hilfslufteinlässe 48 in die Kabine 12 eingeblasenen Hilfsluft einstellt, beträgt die Geschwindigkeit der Hilfsluft beim Einblasen in die Passagierkabine 12 über die Hilfslufteinlässe 48 maximal 1 m/s.

Darüber hinaus steuert die elektronische Steuereinheit 26 die Hilfsluftbereitstellungseinrichtung 52 derart, dass die von der Hilfsluftbereitstellungseinrichtung 52 bereitgestellte Hilfsluft über die Hilfslufteinlässe 48 mit einer derartigen Temperatur in die Kabine 12 eingeblasen wird, dass sich in der Kabine 12 eine gewünschte Raumtemperatur einstellt.

Die elektronische Steuereinheit 26 ist ferner dazu eingerichtet, die Hilfsluftbereitstellungseinrichtung 52 und den Druck im Hilfszuluftkanal 50 bei Bedarf auch so zu steuern, dass die von der Hilfsluftbereitstellungseinrichtung 52 bereitgestellte Hilfsluft über die Hilfslufteinlässe 48 mit einer derartigen Geschwindigkeit und einem derartigen Impuls in die Passagierkabine 12 eingeblasen wird, dass sich in der Passagierkabine 12 für eine Mischlüftung charakteristische Luftwalzen ausbilden und freie Konvektion in der Kabine 12 im Wesentlichen unterdrückt wird. Ein derartiger Betriebsmodus des Flugzeugklimatisierungssystems 16 wird dann gewählt, wenn in einer bestimmten Situation eine möglichst rasche Klimatisierung der Kabine 12 erwünscht oder erforderlich ist.

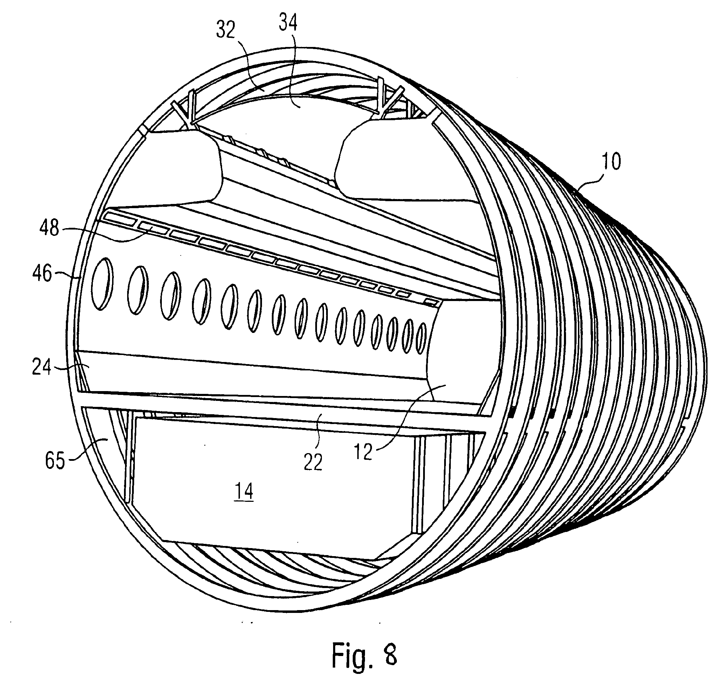

Figur 5 zeigt eine Querschnittsansicht einer Flugzeugpassagierkabine 12, die mittels einer vierten Ausführungsform des Flugzeugklimatisierungssystems 16 belüftet und bedruckt wird. Eine dreidimensionale Darstellung eines Flugzeugrumpfabschnitts mit einer mittels der vierten Ausführungsform des Flugzeugklimatisierungssystems 16 belüfteten und bedruckten Passagierkabine 12 ist Figur 8 zu entnehmen. Die in den Figuren 5 und 8 gezeigte vierte Ausführungsform des Flugzeugklimatisierungssystems 16 unterscheidet sich von der dritten Ausführungsform gemäß Figur 4 lediglich dadurch, dass die Lufteinlässe 24 nicht im Bereich eines Bodens 22 der Passagierkabine 12 angeordnet, sondern bodennah in Seitenwänden 46 der Kabine 12 ausgebildet sind. Die Lufteinlässe 24 sind jeweils mittels eines entsprechenden Zuluftkanals 20 mit der Luftbereitstellungseinrichtung 18 verbunden. Im Übrigen entsprechen der Aufbau und die Funktionsweise der vierten Ausführungsform des Flugzeugklimatisierungssystems 16 gemäß der Figuren 5 und 8 dem Aufbau und der Funktionsweise der in Figur 4 gezeigten Anordnung.

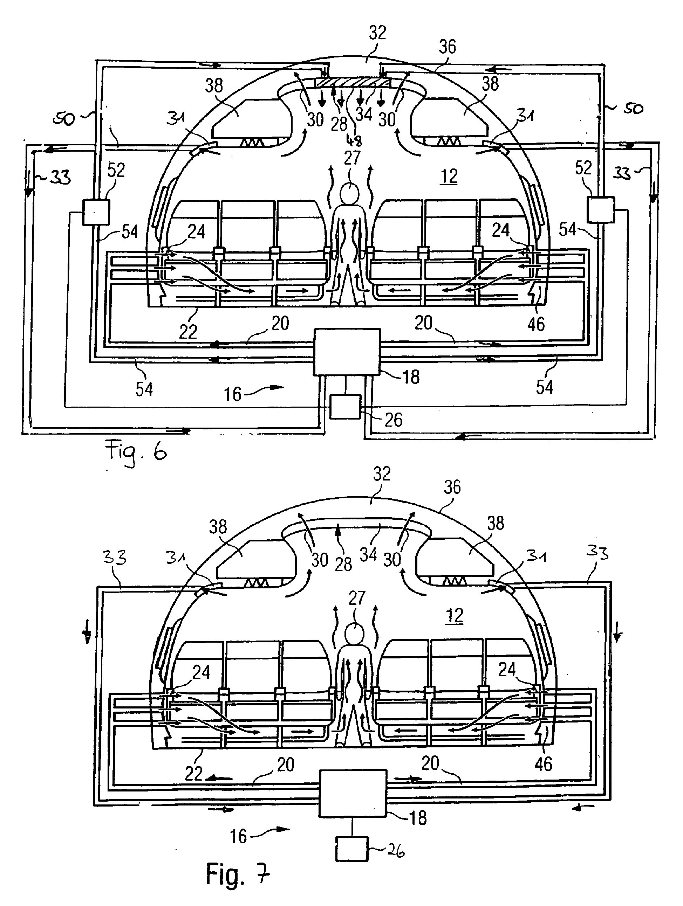

Figur 6 zeigt eine Querschnittsansicht einer Flugzeugpassagierkabine 12, die mittels einer fünften Ausführungsform des Flugzeugklimatisierungssystems 16 belüftet wird. Die in Figur 6 gezeigte fünfte Ausführungsform des Flugzeugklimatisierungssystems 16 unterscheidet sich von der in Figur 5 veranschaulichten vierten Ausführungsform dadurch, dass ein Hilfslufteinlass oder eine Mehrzahl von Hilfslufteinlässen 48 im Bereich der Decke 28 der Passagierkabine 12 ausgebildet ist. Die Hilfslufteinlässe 48 sind wiederum jeweils mit einem Hilfszuluftkanal 50 verbunden und jeder Hilfszuluftkanal 50 ist an eine Hilfsluftbereitstellungseinrichtung 52 angeschlossen, die ihrerseits über einen entsprechenden Anschlusskanal 54 mit der Luftbereitstellungseinrichtung 18 in Verbindung steht.

Die Hilfsluftbereitstellungseinrichtung 52 wird mittels der elektronischen Steuereinheit 26 gesteuert. In dem in Figur 6 veranschaulichten Betriebsfall des Flugzeugklimatisierungssystems 16 steuert die elektronische Steuereinheit 26 die Hilfsluftbereitstellungseinrichtung 52 und den Druck im Hilfszuluftkanal 50 derart, dass die von der Hilfsluftbereitstellungseinrichtung 52 bereitgestellte Hilfsluft über die Hilfslufteinlässe 48 mit einer geringeren Geschwindigkeit in die Flugzeugpassagierkabine 12 eingeblasen wird, als die über die Lufteinlässe 24 in die Flugzeugpassagierkabine 12 eingeblasene Luft. Darüber hinaus steuert die elektronische Steuereinheit 26 die Hilfsluftbereitstellungseinrichtung 52 derart, dass die von der Hilfsluftbereitstellungseinrichtung 52 bereitgestellte Hilfsluft über die Hilfslufteinlässe 48 mit einer geringeren Temperatur in die Kabine 12 eingeblasen wird als die Lufttemperatur in der Kabine 12.

Ferner umfasst das Flugzeugklimatisierungssystem 16 gemäß Figur 6 im Bereich der Seitenwände 46 der Kabine 12 angeordnete Rezirkulationsauslässe 31. Die Rezirkulationsauslässe 31 sind jeweils mit einer Rezirkulationsleitung 33 verbunden, die ihrerseits in einen Mischer der Luftbereitstellungseinrichtung 18 mündet. Die über die im Bereich der Seitenwände 46 der Kabine 12 angeordnete Rezirkulationsauslässe 31 abgeführte Luft ist üblicherweise kühler als über die Decke 28 der Kabine 12 abgeführte Luft. Die Nutzung kühlerer Luft als Rezirkulationsluft bietet energetische Vorteile, die sich bei der Auslegung der Luftbereitstellungseinrichtung 18 vorteilhaft auswirken.

Figur 7 zeigt schließlich eine Querschnittsansicht einer Flugzeugpassagierkabine 12, die mittels einer sechsten Ausführungsform des Flugzeugklimatisierungssystems 16 belüftet wird. Die in Figur 7 gezeigte sechste Ausführungsform des Flugzeugklimatisierungssystems 16 unterscheidet sich von der in Figur 6 veranschaulichten fünften Ausführungsform dadurch, dass auf Hilfslufteinlässe 48 verzichtet wurde, aber im Bereich der Seitenwände 46 der Kabine 12 angeordnete Rezirkulationsauslässe 31 dazu dienen Rezirkulationsluft aus der Kabine 12 abzuführen und über entsprechende Rezirkulationsleitungen 33 in einen Mischer der Luftbereitstellungseinrichtung 18 zu leiten.

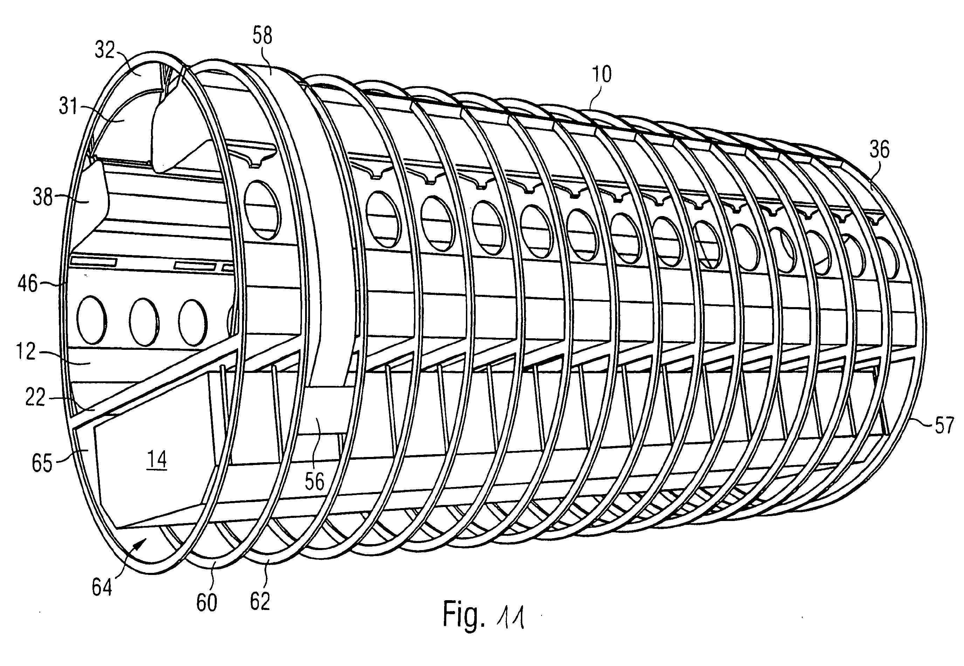

Bei dem Flugzeugklimatisierungssystem 16 erfolgt die Abluftabfuhr aus der Passagierkabine 12 durch die im Bereich der Decke 28 der Kabine 12 angeordneten Luftauslässe 30. Ein Druckregelventil 56 zur Einstellung eines gewünschten Drucks in einem bedruckten Flugzeugbereich kann daher, wie in den Figuren 9, 11 und 12 gezeigt ist, in einem Seitenbereich des Flugzeugrumpfs 10 angeordnet sein. In den Figuren 9 und 11 ist das Druckregelventil 56 in einem Seitenbereich einer Flugzeugrumpfunterschale 57 in Figur 12 in einem Seitenbereich der Flugzeugrumpfoberschale 36 angeordnet. Alternativ dazu ist es auch möglich, das Druckregelventil 56 in einer Druckkalotte zu positionieren oder in einen bestehenden Abluftkanal zu integrieren.

Das Druckregelventil 56 ist über einen von dem Abluftkanal 32 abzweigenden Verbindungskanal 58 mit den Luftauslässen 30 verbunden. Der Verbindungskanal 58 erstreckt sich entlang einer Flugzeughaut zwischen zwei nebeneinander angeordneten Spanten 60, 62 (siehe Figur 11).

Da das Druckregelventil 56 in einem Seitenbereich des Flugzeugrumpfs 10 positioniert ist, muss ein Bodenbereich 64 der Flugzeugrumpfunterschale 57 nicht länger als Stauraum für mit dem Druckregelventil 56 verbundene Rohre genutzt werden. Der Bodenbereich 64 kann daher beispielsweise als zusätzlicher Frachtraum oder für andere Zwecke verwendet werden. Darüber hinaus kann auch auf eine Isolierung der Flugzeugrumpfunterschale 57 verzichtet werden, da es nicht länger erforderlich ist, im Bodenbereich 64 der Rumpfunterschale 57 verlaufende Rohre vor zu tiefen Temperaturen zu schützen. Eine Querschnittsansicht eines Flugzeugrumpfs 10, der eine nicht isolierte Rumpfunterschale 57 mit einem teilweise unventilierten Unterflurbereich 65 aufweist, ist in Figur 12 veranschaulicht. Der im Unterflurbereich 65 des Flugzeugrumpfs 10 angeordnete Frachtraum 14 ist in gewichtsoptimierter Weise durch aus einer brandsicheren Folie bestehende Seitenbegrenzungswände 66 abgegrenzt.

Bei der in der Figur 12 gezeigten Anordnung besteht keine Verbindung zwischen dem in der nicht isolierten Flugzeugrumpfunterschale 57 angeordneten Unterflurbereich 65 und der Passagierkabine 12. Um im Fall eines plötzlichen Druckabfalls im Unterflurbereich 65 oder der Kabine 12 einen schnellen Druckausgleich zwischen diesen beiden Bereichen des Flugzeugs zu ermöglichen, ist eine Druckausgleichsvorrichtung 68 vorgesehen. Die Druckausgleichsvorrichtung 68 ist in Form einer Klappe ausgebildet, die in den den Unterflurbereich 65 von der Passagierkabine 12 trennenden Boden 22 eingebracht ist. Wenn eine Druckdifferenz zwischen der Kabine 12 und dem Unterflurbereich 65 des Flugzeugrumpfs 10 einen vorbestimmten Wert überschreitet, wird die die Druckausgleichsvorrichtung 68 bildende Klappe automatisch geöffnet, so dass ein Druckausgleich zwischen der Kabine 12 und dem Unterflurbereich 65 des Flugzeugrumpfs 10 möglich wird. Dadurch werden durch einen Differenzdruck zwischen der Passagierkabine 12 und dem Unterflurbereich 65 verursachte Beschädigungen der Rumpfstruktur vermieden.

Da, wie bereits erwähnt, keine Verbindung zwischen der Passagierkabine 12 und der Flugzeugrumpfunterschale besteht, wird bei der in der Figur 12 gezeigten Anordnung auch verhindert, dass im Frachtraum 14 entstehende Gase oder Gerüche in die Passagierkabine 12 gelangen. Um eine besonders gute Entlüftung des Frachtraums 14 zu gewährleisten, ist der Frachtraum 14 über eine in der Flugzeugrumpfunterschale angeordnete und in Form einer Klappe ausgebildete Entlüftungseinrichtung 70 mit der Außenatmosphäre verbunden.

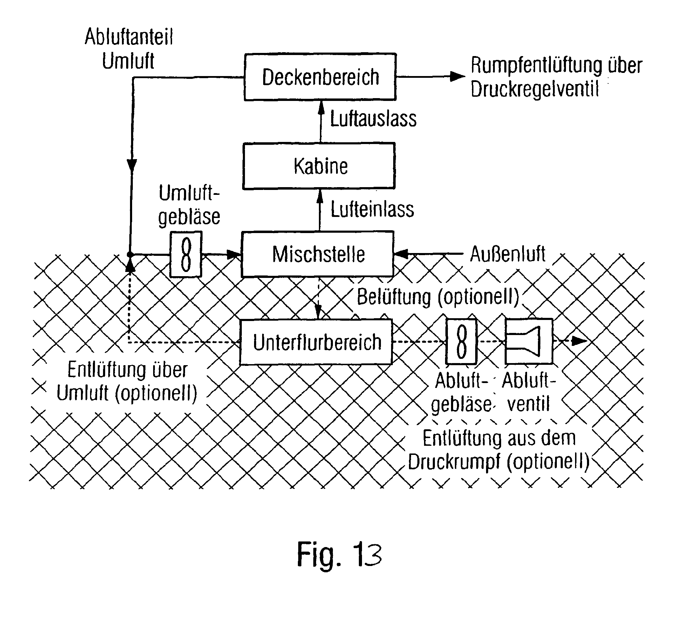

Der Grundaufbau und die Funktionsweise eines oben beschriebenen Flugzeugklimatisierungssystems sind in der schematischen Darstellung der Figur 13 veranschaulicht. In einer Mischstelle bzw. einem Mischer der Luftbereitstellungseinrichtung wird Außenluft mit Rezirkulations- bzw. Umluft gemischt. Von der Mischstelle wird die Luft über den Lufteinlass in die Passagierkabine geleitet, wo sich das oben beschriebene Strömungsmuster ausbildet. Die Abluftabfuhr aus der Kabine erfolgt über den im Deckenbereich der Kabine ausgebildeten Luftauslass. Zur Regelung des Drucks in der Kabine wird die über den Luftauslass aus der Kabine abgeführte Abluft bei Bedarf über das Druckregelventil an die Außenatmosphäre abgeführt. Ein Teil der Abluft wird als Umluft in die Mischstelle der Luftbereitstellungseinrichtung zurückgeführt, wobei die Förderung der Umluft durch die Rezirkulationsleitung mittels eines Umluftgebläses erfolgt.

Ein Unterflurbereich des Flugzeugs kann vollständig oder teilweise unbelüftet sein oder, ebenso wie die Passagierkabine, mittels des Flugzeugklimatisierungssystems belüftet werden. Zur Belüftung des Unterflurbereichs wird Luft von der Mischstelle der Luftbereitstellungseinrichtung in den Unterflurbereich geleitet. Die Abluftabfuhr aus dem Unterflurbereich des Flugzeugs kann durch eine den Unterflurbereich mit der Rezirkulationsleitung oder der Mischstelle der Luftbereitstellungseinrichtung verbindende Leitung erfolgen. In diesem Fall wird die Abluft aus dem Unterflurbereich als Rezirkulationsluft in die Mischstelle der Luftbereitstellungseinrichtung zurückgeführt. Alternativ oder zusätzlich dazu ist jedoch auch eine Abluftabfuhr aus dem Unterflurbereich durch ein entsprechendes Abluftventil möglich. Die Förderung der Abluft in Richtung des Abluftventils erfolgt mittels eines Abluftgebläses.

## Patentansprüche

1. Flugzeug mit einem Klimatisierungssystem, welches umfasst:
- eine Luftbereitstellungseinrichtung (18) zur Bereitstellung von einem zu belüftenden Bereich des Flugzeugs mit einer gewünschten Temperatur und einem gewünschten Druck zuzuführender Luft,
- einen Zuluftkanal (20), der an einem ersten Ende mit der Luftbereitstellungseinrichtung (18) verbunden ist,
- einen mit einem zweiten Ende des Zuluftkanals (20) verbundenen und bodennah in den zu belüftenden Flugzeugbereich mündenden Lufteinlass (24) sowie
- eine Steuervorrichtung (26), die dazu eingerichtet ist, zumindest in bestimmten Betriebssituationen des Klimatisierungssystems zu gewährleisten, dass die von der Luftbereitstellungseinrichtung (18) bereitgestellte Luft über den Lufteinlass (24) mit einer derartigen Geschwindigkeit in den zu belüftenden Flugzeugbereich eintritt dass sich die Luft in dem zu belüftenden Flugzeugbereich über die gesamte Bodennähe flache verteilt und eine bodennahe klimatisationsulftschibt bildet und an in dem zu belüftenden Flugzeugbereich vorhandenen Wärmequelle durch freie konvention die Steuervorrichtung (26) ferner dazu eingerichtet ist, zu gewährleisten, dass die von der Luftbereitstellungseinrichtung (18) bereitgestellte Luft über den Lufteinlass (24) mit einer Geschwindigkeit von 0,1 bis 0,5 m/s und mit einer derartigen Temperatur in den zu belüftenden Flugzeugbereich eintritt, dass sich in dem zu belüftenden Flugzeugbereich eine gewünschte Raumtemperatur einstellt.

2. Flugzeug nach Anspruch 1,
**dadurch gekennzeichnet, dass** der Lufteinlass (24) im Bereich eines Bodens (22) und/oder in einem bodennahen Bereich einer Seitenwand (46) des zu belüftenden Flugzeugbereichs angeordnet ist.

3. Flugzeug nach Anspruch 1 oder 2,
**gekennzeichnet durch**
- eine Einrichtung (52) zur Bereitstellung von dem zu belüftenden Bereich des Flugzeugs mit einer gewünschten Temperatur und einem gewünschten Druck zuzuführender Hilfsluft,
- einen Hilfszuluftkanal (50), der an einem ersten Ende mit der Hilfsluftbereitstellungseinrichtung (52) verbunden ist, und
- einen mit einem zweiten Ende des Hilfszuluftkanals (50) verbundenen und in den zu belüftenden Flugzeugbereich mündenden Hilfslufteinlass (48), wobei der Hilfsluft- einlass (48) vorzugsweise im Bereich einer Seitenwand (46) und/oder im Bereich einer Decke (28) des zu belüftenden Flugzeugbereichs angeordnet ist.

4. Flugzeug nach Anspruch 3,
**gekennzeichnet, durch** eine Hilfssteuervorrichtung, die dazu eingerichtet ist, zu gewährleisten, dass die von der Hilfsluftbereitstellungseinrichtung (52) bereitgestellte Hilfsluft über einen im Bereich einer Seitenwand (46) des zu belüftenden Flugzeugbereichs angeordneten Hilfslufteinlass (48) mit einer derartigen Geschwindigkeit in den zu belüftenden Flugzeugbereich eintritt, dass sich die Luft in dem zu belüftenden Flugzeugbereich im Bereich einer **durch** die Anordnung des Hilfslufteinlasses (48) definierten Ebene verteilt und an in dem zu belüftenden Flugzeugbereich vorhandenen Wärmequellen aufsteigt, und dass die von der Hilfsluftbereitstellungseinrichtung (52) bereitgestellte Hilfsluft über den im Bereich einer Seitenwand (46) des zu belüftenden Flugzeugbereichs angeordneten Hilfslufteinlass (48) mit einer derartigen Temperatur in den zu belüftenden Flugzeugbereich eintritt, dass sich in dem zu belüftenden Flugzeugbereich eine gewünschte Raumtemperatur einstellt.

5. Flugzeug nach Anspruch 3 oder 4,
**gekennzeichnet, durch** eine Hilfssteuervorrichtung, die dazu eingerichtet ist, zu gewährleisten, dass die von der Hilfsluftbereitstellungseinrichtung (52) bereitgestellte Hilfsluft über einen im Bereich einer Decke (28) des zu belüftenden Flugzeugbereichs angeordneten Hilfslufteinlass (48) mit einer geringeren Geschwindigkeit in den zu belüftenden Flugzeugbereich eintritt als die über den Lufteinlass (24) in den zu belüftenden Flugzeugbereich eintretende Luft.

6. Flugzeug nach einem der vorhergehenden Ansprüche,
**gekennzeichnet durch** einen im Bereich einer Decke (28) des zu belüftenden Flugzeugbereichs angeordneten Luftauslass (30) zur Abfuhr von Abluft aus dem zu belüftenden Flugzeugbereich, der über einen Verbindungskanal (58) mit einem Druckregelventil (56) zur Einstellung eines gewünschten Drucks in dem zu belüftenden Flugzeugbereich verbunden ist, wobei das Druckregelventil (56) vorzugsweise in einem Seitenbereich einer Flugzeugrumpfoberschale (36) oder einer Flugzeugrumpfunterschale (57) angeordnet ist, und/oder wobei sich ein mit dem Luftauslass (30) verbundener Abluftkanal (32), zumindest abschnittsweise entlang des Deckenbereichs des zu belüftenden Flugzeugbereichs erstreckt und Abluft aus dem zu belüftenden Flugzeugbereich in Richtung einer Luftsenke leitet, wobei in dem Abluftkanal (32) vorzugsweise eine Kondenswasserschutzvorrichtung (42) angeordnet ist, und/oder wobei der Abluftkanal (32) vorzugsweise so gestaltet und angeordnet ist, dass den Abluftkanal (32) durchströmende Abluft in Wärmekontakt mit im Deckenbereich des zu belüftenden Flugzeugbereichs installierten Wärme erzeugenden Komponenten (44) gebracht wird, um Wärme von den Wärme erzeugenden Komponenten (44) abzuführen.

7. Flugzeug nach einem der vorhergehenden Ansprüche,
**gekennzeichnet durch** einen mit dem Luftauslass (30) und/oder einem separat von dem Luftauslass (30) ausgebildeten Rezirkulationsauslass (31) verbundenen Rezirkulationskanal zur Rückführung von **durch** den Luftauslass (30) aus dem zu belüftenden Flugzeugbereich abgeführter Abluft in die Luftbereitstellungseinrichtung (18).

8. Verfahren zur Klimatisierung eines Flugzeugs mittels eines Klimatisierungssystems mit den Schritten:
- Bereitstellen von einem zu belüftenden Bereich des Flugzeugs mit einer gewünschten Temperatur und einem gewünschten Druck zuzuführender Luft mittels einer Luftbereitstellungseinrichtung (18) und
- Leiten der Luft von der Luftbereitstellungseinrichtung (18) durch einen Zuluftkanal (20) zu einem bodennah in den zu belüftenden Flugzeugbereich mündenden Lufteinlass (24), wobei eine Steuervorrichtung (26) zumindest in bestimmten Betriebssituationen des Klimatisierungssystems gewährleistet, dass die von der Luftbereitstellungseinrichtung (18) bereitgestellte Luft über den Lufteinlass (24) mit einer derartigen Geschwindigkeit in den zu belüftenden Flugzeugbereich eintritt, dass sich die Luft in dem zu belüftenden uber die gesamte fläche Boden verteilt und eine bodennahe klimatisationsulftschibt bildet und an in dem zu belüftenden Flugzeugbereich vorhandenen Wärmequelle durch freie konvektion aufstelgt, wobei die Steuervorrichtung (26) ferner gewährleistet, dass die von der Luftbereitstellungseinrichtung (18) bereitgestellte Luft über den Lufteinlass (24) mit einer Geschwindigkeit von 0,1 bis 0,5 m/s und mit einer derartigen Temperatur in den zu belüftenden Flugzeugbereich eintritt, dass sich in dem zu belüftenden Flugzeugbereich eine gewünschte Raumtemperatur einstellt.

9. Verfahren nach Anspruch 8,
**dadurch gekennzeichnet, dass** die Luft durch einen Lufteinlass (24) in den zu belüftenden Flugzeugbereich eingeblasen wird, der im Bereich eines Bodens (22) und/oder einem bodennahen Bereich einer Seitenwand (46) des zu belüftenden Flugzeugbereichs angeordnet ist.

10. Verfahren nach Anspruch 8 oder 9,
**gekennzeichnet durch** die Schritte:
- Bereitstellen von dem zu belüftenden Bereich des Flugzeugs mit einer gewünschten Temperatur und einem gewünschten Druck zuzuführender Hilfsluft mittels einer Hilfsluftbereitstellungseinrichtung (52) und
- Leiten der Hilfsluft von der Hilfsluftbereitstellungseinrichtung (52) **durch** einen Hilfszuluftkanal (50) zu einem in den zu belüftenden Flugzeugbereich mündenden Hilfslufteinlass (48), wobei die Hilfsluft vorzugsweise über einen im Bereich einer Seitenwand (46) und/oder einen im Bereich einer Decke (28) des zu belüftenden Flugzeugbereichs angeordneten Hilfslufteinlass (48) in den zu belüftenden Flugzeugbereich eingeblasen wird.

11. Verfahren nach Anspruch 10,
**dadurch gekennzeichnet, dass** eine Hilfssteuervorrichtung gewährleistet, dass die von der Hilfsluftbereitstellungseinrichtung (52) bereitgestellte Hilfsluft über einen im Bereich einer Seitenwand (46) des zu belüftenden Flugzeugbereichs angeordneten Hilfslufteinlass (48) mit einer derartigen Geschwindigkeit in den zu belüftenden Flugzeugbereich eintritt, dass sich die Luft in dem zu belüftenden Flugzeugbereich im Bereich einer durch die Anordnung des Hilfslufteinlasses (48) definierten Ebene verteilt und an in dem zu belüftenden Flugzeugbereich vorhandenen Wärmequellen aufsteigt, und dass die von der Hilfsluftbereitstellungseinrichtung (52) bereitgestellte Hilfsluft über den im Bereich einer Seitenwand (46) des zu belüftenden Flugzeugbereichs angeordneten Hilfslufteinlass (48) mit einer derartigen Temperatur in den zu belüftenden Flugzeugbereich eintritt, dass sich in dem zu belüftenden Flugzeugbereich eine gewünschte Raumtemperatur einstellt.

12. Verfahren nach einem der Ansprüche 8 bis 11,
**dadurch gekennzeichnet, dass** eine Hilfssteuervorrichtung gewährleistet, dass die von der Hilfsluftbereitstellungseinrichtung (52) bereitgestellte Hilfsluft über einen im Bereich einer Decke (28) des zu belüftenden Flugzeugbereichs angeordneten Hilfslufteinlass (48) mit einer geringeren Geschwindigkeit in den zu belüftenden Flugzeugbereich eintritt als die über den Lufteinlass (24) in den zu belüftenden Flugzeugbereich eintretende Luft, und/oder dass Abluft aus dem zu belüftenden Flugzeugbereich durch einen im Bereich einer Decke (28) des zu belüftenden Flugzeugbereichs angeordneten Luftauslass (30), der über einen Verbindungskanal (58) mit einem Druckregelventil (56) verbunden ist, aus dem zu belüftenden Flugzeugbereich abgeführt und bei Bedarf zur Einstellung eines gewünschten Drucks in dem zu belüftenden Flugzeugbereich über das Druckregelventil (56) an die Außenatmosphäre abgeführt wird, wobei die Abluft vorzugsweise aus dem zu belüftenden Flugzeugbereich bei Bedarf zur Einstellung eines gewünschten Drucks in dem zu belüftenden Flugzeugbereich über ein in einem Seitenbereich einer Flugzeugrumpfoberschale (36) oder in einem Seitenbereich einer Flugzeugrumpfunterschale (57) angeordnetes Druckregelventil (56) an die Außenatmosphäre abgeführt wird, und/oder wobei die Abluft vorzugsweise aus dem zu belüftenden Flugzeugbereich durch einen mit dem Luftauslass (30) verbundenen Abluftkanal (32), der sich zumindest abschnittsweise entlang des Deckenbereichs des zu belüftenden Flugzeugbereichs erstreckt, in Richtung einer Luftsenke geleitet wird.

13. Verfahren nach Anspruch 12,
**dadurch gekennzeichnet, dass** Kondenswasser in dem Abluftkanal mittels einer Kondenswasserschutzvorrichtung (42) aufgefangen wird und/oder dass den Abluftkanal (32) durchströmende Abluft in Wärmekontakt mit im Deckenbereich des zu belüftenden Flugzeugbereichs installierten Wärme erzeugenden Komponenten (44) gebracht wird, um Wärme von den Wärme erzeugenden Komponenten (44) abzuführen.

14. Verfahren nach einem der Ansprüche 8 bis 13,
**dadurch gekennzeichnet, dass** durch den Luftauslass (30) und/oder einen separat von dem Luftauslass (30) ausgebildeten Rezirkulationsauslass (31) aus dem zu belüftenden Flugzeugbereich abgeführte Abluft über einen mit dem Luftauslass (30) und/oder dem Rezirkulationsauslass (31) verbundenen Rezirkulationskanal in die Luftbereitstellungseinrichtung (18) zurückgeführt wird.

## Claims

1. Aircraft with an air conditioning system, which comprises:
- an air providing device (18) for providing air to be supplied to a region of the aircraft to be ventilated at a desired temperature and a desired pressure,
- a supply air duct (20) which is connected at a first end to the air providing device (18),
- an air inlet (24) which is connected to a second end of the supply air duct (20) and opens near the floor into the aircraft region to be ventilated, and
- a control device (26) which is adapted to ensure at least in selected operational situations of the air conditioning system that the air provided by the air providing device (18) enters the aircraft region to be ventilated via the air inlet (24), at such a speed that the air is distributed in the aircraft region to be ventilated over the entire floor area and forms a climatisation air layer near the floor and rises at heat sources present in the aircraft region to be ventilated, wherein the control device (26) further is adapted to ensure that the air provided by the air providing device (18) enters the aircraft region to be ventilated via the air inlet (24) at a speed of 0.1 to 0.5 m/s and at such a temperature that a desired ambient temperature is set in the aircraft region to be ventilated.

2. Aircraft according to Claim 1,
**characterised in that** the air inlet (24) is arranged in the region of a floor (22) and/or in a region, near the floor, of a side wall (46) of the aircraft region to be ventilated.

3. Aircraft according to claim 1 or 2,
**characterised by**
- a device (52) for providing auxiliary air to be supplied the region of the aircraft to be ventilated at a desired temperature and a desired pressure,
- an auxiliary supply air duct (50) which is connected at a first end to the auxiliary air providing device (52), and
- an auxiliary air inlet (48) which is connected to a second end of the auxiliary supply air duct (50) and opens into the aircraft region to be ventilated, wherein the auxiliary air inlet (48) preferably is arranged in the region of a side wall (46) and/or in the region of a ceiling (28) of the aircraft region to be ventilated.

4. Aircraft according to Claim 3,
**characterised by** an auxiliary control device which is adapted to ensure that the auxiliary air provided by the auxiliary air providing device (52) enters the aircraft region to be ventilated, via an auxiliary air inlet (48) arranged in the region of a side wall (46) of the aircraft region to be ventilated, at such a speed that the air is distributed in the aircraft region to be ventilated in the region of a plane defined by the arrangement of the auxiliary air inlet (48) and rises at heat sources present in the aircraft region to be ventilated, and that the auxiliary air provided by the auxiliary air providing device (52) enters the aircraft region to be ventilated, via the auxiliary air inlet (48) arranged in the region of a side wall (46) of the aircraft region to be ventilated, at such a temperature that a desired ambient temperature is set in the aircraft region to be ventilated.

5. Aircraft according to Claim 3 or 4,
**characterised by** an auxiliary control device which is adapted to ensure that the auxiliary air provided by the auxiliary air providing device (52) enters the aircraft region to be ventilated, via an auxiliary air inlet (48) arranged in the region of a ceiling (28) of the aircraft region to be ventilated, at a lower speed than the air entering the aircraft region to be ventilated via the air inlet (24).

6. Aircraft according to one of the preceding claims,
**characterised by** an air outlet (30), arranged in the region of a ceiling (28) of the aircraft region to be ventilated, for removing exhaust air from the aircraft region to be ventilated, which air outlet is connected via a connecting duct (58) to a pressure regulating valve (56) for setting a desired pressure in the aircraft region to be ventilated, wherein the pressure regulating valve (56) preferably is arranged in a side region of an aircraft fuselage upper shell (36) or an aircraft fuselage lower shell (57), and/or wherein an exhaust air duct (32) which is connected to the air outlet (30), extends at least in sections along the ceiling region of the aircraft region to be ventilated and leads exhaust air from the aircraft region to be ventilated in the direction of an air sink, wherein a condensation water protection device (42) preferably is arranged in the exhaust air duct (32) and/or wherein the exhaust air duct (32) preferably is configured and arranged in such a way that exhaust air flowing through the exhaust air duct (32) is brought into thermal contact with heat-generating components (44) installed in the ceiling region of the aircraft region to be ventilated, in order to remove heat from the heat-generating components (44).

7. Aircraft according to one of the preceding claims,
**characterised by** a recirculation duct, connected to the air outlet (30) and/or to a recirculation outlet (31) formed separately from the air outlet (30), for returning to the air providing device (18) exhaust air removed from the aircraft region to be ventilated through the air outlet (30).

8. Method for air conditioning an aircraft by means of an air conditioning system, the method comprising the steps:
- providing air, to be supplied to a region of the aircraft to be ventilated at a desired temperature and a desired pressure, by means of an air providing device (18), and
- leading the air from the air providing device (18) through a supply air duct (20) to an air inlet (24) which opens near the floor into the aircraft region to be ventilated, a control device (26) ensuring at least in selected operational situations of the air conditioning system that the air provided by the air providing device (18) enters the aircraft region to be ventilated via the air inlet (24) at such a speed that the air is distributed in the aircraft region to be ventilated over the entire floor area and forms a climatisation air layer near the floor and rises at heat sources present in the aircraft region to be ventilated, wherein the control device (26) further ensures that the air provided by the air providing device (18) enters the aircraft region to be ventilated via the air inlet (24) at a speed of 0.1 to 0.5 m/s and at such a temperature that a desired ambient temperature is set in the aircraft region to be ventilated.

9. Method according to Claim 8,
**characterised in that** the air is blown into the aircraft region to be ventilated through an air inlet (24) which is arranged in the region of a floor (22) and/or in a region, near the floor, of a side wall (46) of the aircraft region to be ventilated.

10. Method according to Claim 8 or 9,
**characterised by** the steps:
- providing auxiliary air, to be supplied to the region of the aircraft to be ventilated at a desired temperature and a desired pressure, by means of an auxiliary air providing device (52), and
- leading the auxiliary air from the auxiliary air providing device (52) through an auxiliary supply air duct (50) to an auxiliary air inlet (48) which opens into the aircraft region to be ventilated, wherein the auxiliary air preferably is blown into the aircraft region to be ventilated via an auxiliary air inlet (48) arranged in the region of a side wall (46) and/or in the region of a ceiling (28) of the aircraft region to be ventilated.

11. Method according to Claim 10,
**characterised in that** an auxiliary control device ensures that the auxiliary air provided by the auxiliary air providing device (52) enters the aircraft region to be ventilated, via an auxiliary air inlet (48) arranged in the region of a side wall (46) of the aircraft region to be ventilated, at such a speed that the air is distributed in the aircraft region to be ventilated in the region of a plane defined by the arrangement of the auxiliary air inlet (48) and rises at heat sources present in the aircraft region to be ventilated, and that the auxiliary air provided by the auxiliary air providing device (52) enters the aircraft region to be ventilated, via the auxiliary air inlet (48) arranged in the region of a side wall (46) of the aircraft region to be ventilated, at such a temperature that a desired ambient temperature is set in the aircraft region to be ventilated.

12. Method according to one of Claims 8 to 11,
**characterised in that** an auxiliary control device ensures that the auxiliary air provided by the auxiliary air providing device (52) enters the aircraft region to be ventilated, via an auxiliary air inlet (48) arranged in the region of a ceiling (28) of the aircraft region to be ventilated, at a lower speed than the air entering the aircraft region to be ventilated via the air inlet (24), and/or that exhaust air from the aircraft region to be ventilated is removed from the aircraft region to be ventilated through an air outlet (30) arranged in the region of a ceiling (28) of the aircraft region to be ventilated and connected via a connecting duct (58) to a pressure regulating valve (56), and, if required, for setting a desired pressure in the aircraft region to be ventilated, is removed to the outside atmosphere via the pressure regulating valve (56), wherein the exhaust air from the aircraft region to be ventilated preferably, if required, for setting a desired pressure in the aircraft region to be ventilated, is removed to the outside atmosphere via a pressure regulating valve (56) arranged in a side region of an aircraft fuselage upper shell (36) or in a side region of an aircraft fuselage lower shell (57), and/or wherein the exhaust air from the aircraft region to be ventilated preferably is led through an exhaust air duct (32), which is connected to the air outlet (30) and extends at least in sections along the ceiling region of the aircraft region to be ventilated, in the direction of an air sink.

13. Method according to Claim 12,
**characterised in that** condensation water in the exhaust air duct is caught by means of a condensation water protection device (40) and/or **in that** exhaust air flowing through the exhaust air duct (32) is brought into thermal contact with heat-generating components (44) installed in the ceiling region of the aircraft region to be ventilated, in order to remove heat from the heat-generating components (44).

14. Method according to one of Claims 8 to 13,
**characterised in that** exhaust air removed from the aircraft region to be ventilated through the air outlet (30) and/or a recirculation outlet (31) formed separately from the air outlet (30) is returned to the air providing device (18) via a recirculation duct connected to the air outlet (30) and/or to the recirculation outlet (31).

## Revendications

1. Avion équipé d'un système de climatisation, lequel comprend :
- un dispositif d'alimentation en air (18) servant à fournir l'air destiné à alimenter une zone d'avion à ventiler à une température et à une pression souhaitées,
- un canal d'amenée d'air (20) relié par une première extrémité audit dispositif d'alimentation en air (18),
- une entrée d'air (24) reliée à une deuxième extrémité dudit canal d'amenée d'air (20) et débouchant à proximité du sol de la zone d'avion à ventiler, et
- un dispositif de commande (26) conçu pour garantir qu'au moins dans certaines situations de marche du système de climatisation, l'air fourni par le dispositif d'alimentation en air (18) pénètre à une telle vitesse dans la zone d'avion à ventiler via ladite entrée d'air (24) que l'air se répand sur toute la surface du sol dans la zone d'avion à ventiler et forme une couche d'air de climatisation proche du sol et s'élève par convection libre vers les sources de chaleur présentes dans la zone d'avion à ventiler, ledit dispositif de commande (26) étant en outre conçu pour garantir que l'air fourni par le dispositif d'alimentation en air (18) pénètre dans la zone d'avion à ventiler via l'entrée d'air (24) à une vitesse comprise entre 0,1 et 0,5 m/s et à une température telle qu'une température ambiante souhaitée est atteinte dans la zone d'avion à ventiler.

2. Avion selon la revendication 1,
**caractérisé en ce que** l'entrée d'air (24) est montée dans la région d'un sol (22) et/ou dans une zone proche du sol d'une paroi latérale (46) de la zone d'avion à ventiler.

3. Avion selon la revendication 1 ou 2,
**caractérisé par**
- un dispositif d'alimentation en air auxiliaire (52) servant à fournir l'air auxiliaire destiné à alimenter la zone d'avion à ventiler à une température et à une pression souhaitées,
- un canal d'amenée d'air auxiliaire (50) relié par une première extrémité audit dispositif d'alimentation en air auxiliaire (52), et
- une entrée d'air auxiliaire (48) reliée à une deuxième extrémité du canal d'amenée d'air auxiliaire (50) et débouchant à proximité du sol de la zone d'avion à ventiler, ladite entrée d'air auxiliaire (48) étant montée de préférence dans la zone d'une paroi latérale (46) et/ou dans la zone plafond (28) de la zone d'avion à ventiler.

4. Avion selon la revendication 3,
**caractérisé par** un dispositif de commande auxiliaire conçu pour garantir que l'air auxiliaire fourni par le dispositif d'alimentation en air auxiliaire (52) pénètre à une telle vitesse dans la zone d'avion à ventiler via une entrée d'air auxiliaire (48) montée dans la zone d'une paroi latérale (46) de la zone d'avion à ventiler que l'air dans la zone d'avion à ventiler se répand dans la zone d'un plan défini par la disposition de l'entrée d'air auxiliaire (48) et s'élève vers les sources de chaleur présentes dans la zone d'avion à ventiler, et que l'air auxiliaire fourni par le dispositif d'alimentation en air auxiliaire (52) pénètre via l'entrée d'air auxiliaire (48) montée dans la zone d'une paroi latérale (46) de la zone d'avion à ventiler à une température telle dans la zone d'avion à ventiler qu'une température ambiante souhaitée est atteinte dans la zone d'avion à ventiler.

5. Avion selon la revendication 3 ou 4,
**caractérisé par** un dispositif de commande auxiliaire conçu pour garantir que l'air auxiliaire fourni par le dispositif d'alimentation en air auxiliaire (52) pénètre dans la zone d'avion à ventiler via une entrée d'air auxiliaire (48) montée dans la zone plafond (28) de la zone d'avion à ventiler à une vitesse plus faible que l'air entrant via l'entrée d'air (24) dans la zone d'avion à ventiler.

6. Avion selon l'une des revendications précédentes,
**caractérisé par** une sortie d'air (30) montée dans la zone plafond (28) de la zone d'avion à ventiler et servant à évacuer l'air sortant de la zone d'avion à ventiler, laquelle sortie est reliée via un canal de jonction (58) à une valve de régulation de pression (56) pour obtenir dans la zone d'avion à ventiler une pression souhaitée, ladite valve de régulation de pression (56) étant montée de préférence dans une zone latérale d'une coque d'avion supérieure (36) ou dans une zone latérale d'une coque d'avion inférieure (57), et/ou un canal d'évacuation d'air (32) relié à ladite sortie d'air (30) s'étendant au moins par secteurs le long de la zone plafond de la zone d'avion à ventiler et dirigeant vers un puits d'air l'air sortant de la zone d'avion à ventiler, un dispositif de protection contre l'eau de condensation (42) étant de préférence monté dans ledit canal d'évacuation d'air (32), et/ou le canal d'évacuation d'air (32) étant conçu et monté de préférence de sorte telle que l'air sortant par le canal d'évacuation d'air (32) est amené en contact thermique avec les éléments générateurs de chaleur (44) installés dans la zone plafond de la zone d'avion à ventiler pour évacuer une partie de la chaleur produite par les éléments générateurs de chaleur (44).

7. Avion selon l'une des revendications précédentes,
**caractérisé par** un canal de recirculation relié à la sortie d'air (30) et/ou à une sortie de recirculation (31) formée séparément de la sortie d'air (30) pour ramener au dispositif d'alimentation en air (18) l'air sortant évacué de la zone d'avion à ventiler via la sortie d'air (30).

8. Procédé pour climatiser un avion au moyen d'un système de climatisation, comprenant pour étapes :
- fourniture par un dispositif d'alimentation en air (18) de l'air destiné à alimenter une zone d'avion à ventiler à une température et à une pression souhaitées, et
- conduite via un canal d'amenée d'air (20) de l'air fourni par le dispositif d'alimentation en air (18) vers une entrée d'air (24) débouchant à proximité du sol dans la zone d'avion à ventiler, un dispositif de commande (26) garantissant au moins dans certaines situations de marche du système de climatisation que l'air fourni par le dispositif d'alimentation en air (18) pénètre à une telle vitesse dans la zone d'avion à ventiler via l'entrée d'air (24) que l'air se répand sur toute la surface du sol, qu'il forme une couche d'air de climatisation proche du sol et s'élève par convection libre vers les sources de chaleur présentes dans la zone d'avion à ventiler, le dispositif de commande (26) étant en outre conçu pour garantir que l'air fourni par le dispositif d'alimentation en air (18) pénètre via l'entrée d'air (24) dans la zone d'avion à ventiler à une vitesse comprise entre 0,1 et 0,5 m/s et à une température telle qu'une température ambiante souhaitée est atteinte dans la zone d'avion à ventiler.

9. Procédé selon la revendication 8,
**caractérisé en ce que** l'air est soufflé dans la zone d'avion à ventiler via une entrée d'air (24) qui est montée dans la zone sol (22) et/ou dans une zone proche du sol d'une paroi latérale (46) de la zone d'avion à ventiler.

10. Procédé selon la revendication 8 ou 9,
**caractérisé par** les étapes :
- fourniture par un dispositif d'alimentation en air auxiliaire (52) de l'air auxiliaire destiné à alimenter une zone d'avion à ventiler à une température et à une pression souhaitées, et
- conduite via un canal d'amenée d'air auxiliaire (50) de l'air auxiliaire fourni par le dispositif d'alimentation en air auxiliaire (52) vers une entrée d'air auxiliaire (48) débouchant à proximité du sol dans la zone d'avion à ventiler, l'air auxiliaire étant soufflé dans la zone d'avion à ventiler de préférence via une entrée d'air auxiliaire (48) montée dans la zone d'une paroi latérale (46) et/ou dans la zone plafond de la zone d'avion à ventiler.

11. Procédé selon la revendication 10,
**caractérisé en ce qu'**un dispositif de commande auxiliaire garantit que l'air auxiliaire fourni par le dispositif d'alimentation en air auxiliaire (52) pénètre dans la zone d'avion à ventiler via une entrée d'air auxiliaire (48) montée dans la zone d'une paroi latérale (46) de la zone d'avion à ventiler à une vitesse telle que l'air dans la zone d'avion à ventiler se répand dans la zone d'un plan défini par la disposition de l'entrée d'air auxiliaire (48) et s'élève vers les sources de chaleur présentes dans la zone d'avion à ventiler, et **en ce que** l'air auxiliaire fourni par le dispositif d'alimentation en air auxiliaire (52) pénètre dans la zone d'avion à ventiler via l'entrée d'air auxiliaire (48) montée dans la zone d'une paroi latérale (46) de la zone d'avion à ventiler à une température telle que la température ambiante souhaitée est atteinte dans la zone d'avion à ventiler.

12. Procédé selon l'une des revendications 8 à 11,
**caractérisé en ce qu'**un dispositif de commande auxiliaire garantit que l'air auxiliaire fourni par le dispositif d'alimentation en air auxiliaire (52) pénètre dans la zone d'avion à ventiler via une entrée d'air auxiliaire (48) montée dans la zone plafond (28) de la zone d'avion à ventiler à une vitesse plus faible que l'air entrant par l'entrée d'air (24) dans la zone d'avion à ventiler, et/ou **en ce que** l'air sortant de la zone d'avion à ventiler est évacué de cette dernière par une sortie d'air (30) montée dans la zone plafond (28) de la zone d'avion à ventiler et reliée via un canal de jonction (58) à une valve de régulation de pression (56) et est, si nécessaire, déchargé dans l'atmosphère extérieure pour obtenir dans la zone d'avion à ventiler une pression souhaitée au moyen de ladite valve de régulation de pression (56), l'air sortant étant si nécessaire déchargé dans l'atmosphère extérieure de préférence depuis la zone d'avion à ventiler pour obtenir dans la zone d'avion à ventiler une pression souhaitée au moyen d'une valve de régulation de pression (56) montée dans une zone latérale d'une coque d'avion supérieure (36) ou dans une zone latérale d'une coque d'avion inférieure (57), et/ou l'air sortant étant conduit de préférence de la zone d'avion à ventiler vers un puits d'air via un canal d'évacuation d'air (32) relié à la sortie d'air (30) et s'étendant au moins par secteurs le long de la zone plafond de la zone d'avion à ventiler.

13. Procédé selon la revendication 12,
**caractérisé en ce que** l'eau de condensation se formant dans le canal d'évacuation d'air est récupérée au moyen d'un dispositif de protection contre l'eau de condensation (42) et/ou **en ce que** l'air sortant traversant le canal d'évacuation d'air (32) est amené en contact thermique avec les éléments générateurs de chaleur (44) installés dans la zone plafond de la zone d'avion à ventiler pour évacuer une partie de la chaleur produite par les éléments générateurs de chaleur (44).

14. Procédé selon l'une des revendications 8 à 13,
**caractérisé en ce que** l'air sortant évacué de la zone d'avion à ventiler via la sortie d'air (30) et/ou via une sortie de recirculation (31) formée séparément de la sortie d'air (30) est ramené au dispositif d'alimentation en air (18) par un canal de recirculation relié à la sortie d'air (30) et/ou à la sortie de recirculation (31).
